**Europäisches Patentamt**

**European Patent Office**

**Office européen des brevets**

(19)

(11) **EP 1 617 103 A1**

(12) **EUROPEAN PATENT APPLICATION**
published in accordance with Art. 158(3) EPC

(43) Date of publication:
**18.01.2006 Bulletin 2006/03**

(51) Int Cl.:
**F16H 25/20** (1968.09)

(21) Application number: **04728393.2**

(22) Date of filing: **20.04.2004**

(86) International application number:
**PCT/JP2004/005598**

(87) International publication number:
**WO 2004/094870 (04.11.2004 Gazette 2004/45)**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **24.04.2003 JP 2003120353**

(71) Applicant: **Toyota Jidosha Kabushiki Kaisha Toyota-shi, Aichi 471-8571 (JP)**

(72) Inventor: **SUGITANI, Nobuyoshi Toyota Jidosha K.K. Toyota-shi, Aichi 471-8571 (JP)**

(74) Representative: **Winter, Brandl, Fürniss, Hübner Röss, Kaiser, Polte Partnerschaft Patent- und Rechtsanwaltskanzlei Bavariaring 10 80336 München (DE)**

(54) **PLANETARY DIFFERENTIAL SCREW-TYPE ROTATIONAL MOTION/LINEAR MOTION CONVERTER**

(57) The object of the present invention is to convert a rotary motion into a linear motion more precisely than ever by utilizing the principles of a planetary gear mechanism and a differential screw. The rotary/linear motion conversion device of the present invention has a screw shaft 20, a plurality of planetary screw rollers 36 mating with the screw shaft therearound, and a roller nut 24, with the screw shaft 20 and the planetary screw rollers 36 mating with one another by threads of opposite winding directions, while the planetary screw rollers 36 and the roller nut 24 mate with one another by threads of a same winding direction, wherein the respective threads are of a common pitch, and the number of co-extending threads of either of the screw nut and the roller nut is varied from that which satisfies the condition that neither of the screw shaft nor the roller nut moves linearly relative to one another in spite of a relative rotation thereof along with rotation and revolving of the planetary screw rollers relative to the screw shaft and the roller nut with no slippage.

FIG. 1

EP 1 617 103 A1

**Description**

**Background of the Invention**

*Field of the Invention*

This invention relates to a rotary/linear motion converter, and more specifically, to a planetary differential screw type rotary/linear motion converter which converts a rotary motion into a linear motion.

*Description of the Prior Art*

As one of a screw type rotary/linear motion converter for converting a rotary motion into a linear motion, there has been known a planetary screw type rotary/linear motion converter having a screw shaft, planetary screw rollers positioned around and mating with the screw shaft, and a roller nut surrounding the screw shaft and the planetary screw rollers and mating with the latter, as described, for example, in Japanese Patent Laid-Open Publication No. 10-19675.

According to such a screw type rotary/linear motion converter, when one of the screw shaft and the roller nut is rotated, the planetary screw rollers rotate, so that the other of the screw shaft and the roller nut is thereby moved linearly, wherein the efficiency of movement conversion can be made higher as compared with, for example, a rotary/linear motion converter by a screw shaft and a nut mated with each other via a trapezoidal thread, with an availability of a higher load resistance as compared with a ball screw type rotary/linear motion converter in which balls are interposed between a screw shaft and a nut, and also a smaller linear displacement per one revolution of the screw shaft or the nut.

A devices having a screw shaft, planetary screw rollers and a roller nut, a bearing device is described in US Patent No. 2,683,379, and a rotary/linear motion converter is described in US Patent No. 3,173,304.

However, in the conventional screw type rotary/linear motion converter described in the above-mentioned JP 10-196756, no relative thrust or linear displacement occurs between the planetary screw rollers and the roller nut, and therefore, the linear displacement of the screw shaft per one revolution of the roller nut can not be made small, and there is a problem that the assembling is not convenient.

Although the device described in the above-mentioned US patent 2,683379 is a bearing device, since it makes a linear motion while rotation, it can also be used as a rotary/linear motion converter. However, when this device is used as a rotary/linear motion converter, the operational performance changes according to a load applied thereto, so that the ratio of conversion between the rotary motion and the linear motion (output displacement per unit input displacement) fluctuates, and therefore, there is a problem that a rotary motion is not correctly converted into a linear motion with a definite correspondence between the angle of rotation and the linear displacement.

Moreover, a mechanism to transmit a rotation by an engagement of spur gears is required in addition to a screw mating, and if there is no such spur gear engagement, the bearing device will be readily locked, and a noise due to the engagement of the spur gears is unavoidable, particularly a loud noise when a high-speed rotation is input.

The device described in the above-mentioned US patent 3,173,304 is a device widely sold as a rotary/linear motion converter. However, since the threads of the planetary screw rollers and the roller nut extend in the same direction, with the number of threads of the planetary screw roller being equal to that of the roller nut, the linear displacement of the screw shaft during a rotation of the roller nut occurs in the same manner as in a usual screw having no planetary screw rollers. Therefore, the linear displacement of the screw shaft which occurs when the planetary screw rollers rotate can be the same as the linear displacement of the screw shaft which occurs when the planetary screw rollers slide without rotating. In other words, in the rotary/linear motion converter described in the above-mentioned US patent 3,173,304, it is preconditioned that a rolling and a sliding of the rollers occur at the same time at their mating parts, and therefore, the friction becomes a composite of a sliding friction and a rolling friction, rendering the friction being not constant. Moreover, the device described in the above-mentioned US patent 3,173,304 is only to operate a trapezoidal screw, or a conventional rotary/linear motion converter, smoothly, but it can not reduce a linear displacement to be smaller.

On the other hand, because of an increased need for high precision positioning and load bearing performance in the latest machine tools and others, it is required that a rotary/linear motion converter can do a very correct motion conversion between a rotary motion and a linear motion, with an excellent performance of load bearing.

In view of such problems concerned with the devices described in the above-mentioned patents and the requirements for the performances of rotary/linear motion converters, the inventor of the present application has made studies to overcome the above-mentioned problems, not to lose the superior performance of load resistance of the device described in US patent 3,173,304, so as to achieve a reduction of motion by both a planetary-gear mechanism and a differential screw mechanism.

Generally, the gears of a planetary gear device is not helical gears but spur gears for a convenience of assembly. When the gears of a planetary gear device are helical, the directions of helicoid are opposite in the sun gear and the planetary pinions at a common helical angle, while the ring gear is of the same helical direction as the planetary pinions.

Therefore, in order to obtain a reduction device of a planetary gear mechanism incorporating the screw engagements, the pitch and the lead angle must be common to a screw shaft corresponding to a sun gear, a planetary screw roller corresponding to a planetary pinion and a roller nut corresponding to a ring gear, with the direction of thread of the screw shaft being opposite to that of the others.

However, in such a structure, since no linear displacement occurs relative to one another among those screw components, the screw components can not be assembled. Through extensive investigations at this point, the inventor found that, in order to make it possible to assemble those screw components by generating a relative linear displacement among them, the lead angle of the screw shaft or the roller nut may be increased or decreased, while ensuring the mating of the threads, so as thereby to generate a linear displacement between the screw shaft and the roller nut.

Generally, in order for two screw components to mate with each other completely, the pitches of the screws must be mutually common. Further, in a planetary-mechanism of screw components, in order to let all lead angles of a screw shaft, planetary screw rollers, and a roller nut be consistent with one another, the ratios among the effective screw diameters (thread pitch diameters) of the screw shaft, the planetary screw rollers, and the roller nut must be consistent with the ratios among the numbers of co-extending threads of these components. Accordingly, the relationship in these components that it induces no relative linear displacement among these components is that the screw shaft only is opposite to the others in the thread winding direction, with the thread pitch of the screw shaft, the planetary screw rollers and the roller nut being equal to one another, while the ratios among the numbers of co-extending threads of these components are equal to the ratios among the thread pitch diameters of these components.

In contrast, when the number of co-extending threads of one of the screw components (screw shaft or roller nut) is increased or decreased by an integer amount from that which satisfies the above-mentioned relationship for inducing no linear displacement, a linear displacement of one screw component relative to the other is available. In this specification, the number of thread or threads by which the number of co-extending threads is increased or decreased from that which satisfied the above-mentioned relationship is referred to as "thread number difference".

Summary of the Invention

Based on the knowledge acquired as a result of the extensive investigations performed by the inventor, it is a principal object of the present invention to provide a rotary/linear motion converter which has a screw shaft, planetary screw rollers, and a roller nut, and provides a conversion of a rotary movement to a linear movement at a larger reduction ratio than ever, while ensuring a superior performance of resistance to load, by using both the rotational reduction of a planetary mechanism (planetary-gear reduction mechanism) and the principle of differential screw between the screw shaft and the planetary screw rollers and between the planetary screw rollers and the roller nut,.

According to the present invention, the above-mentioned principal object is achieved by a planetary differential screw type rotary/linear motion converter comprising a screw shaft; a plurality of planetary screw rollers positioned around and mating with the screw shaft; and a roller nut surrounding the screw shaft and the planetary screw rollers and mating with the planetary screw rollers; characterized in that the screw shaft and the planetary screw rollers mate with one another with thread winding directions thereof being opposite to one another; the planetary screw rollers and the roller nut mate with one another with thread winding directions thereof being same as one another; thread pitches of the screw shaft, the planetary screw rollers and the roller nut are mutually equal; number of co-extending threads of one of the screw shaft and the roller nut is varied from such a relationship with respect to effective screw diameters vs. the number of co-extending threads of the screw shaft, the planetary screw rollers and the roller nut that induces no linear displacement among the screw shaft; the planetary screw rollers and the roller nut by a relative rotation therebetween; and in accordance with a relative rotation between the screw shaft and the roller nut, the planetary screw rollers rotate relative to the screw shaft and the roller nut in mating therewith with no slippage therebetween. (Referred to as structure 1 hereinunder.)

According to this structure, the screw shaft, the planetary screw rollers and the roller nut cooperate to carry out the same reducing function as a planetary gear reduction mechanism, while the screw shaft or the roller nut cooperates with the planetary screw rollers to function as a differential screw, so that an exactly definite correspondence between a rotary angle and a linear displacement is established between the screw shaft and the roller nut, enabling a correct and definite conversion of a rotary motion into a minute linear motion, with a resistance-to-load performance being ensured in the same manner as in the device of the above-mentioned US patent No. 3,173,304, because of the mutual mating of the screw shaft, the planetary screw rollers and the roller nut.

Further, when it is named that the efficiency in conversion of a rotary kinetic energy into a linear kinetic energy as a forward efficiency, while the efficiency in conversion of a linear kinetic energy into a rotary kinetic energy as a backward efficiency, the forward and backward efficiencies are both dependent on the friction on the screw threads, and therefore, on the lead angles of the screw threads, in the conventional rotary/linear motion converters. In contrast, according to the above-mentioned structure 1, as explained in detail later, the forward efficiency can be increased up to 80% or higher, irrespective of the lead angles of the screw threads, so that a rotary motion can be efficiently converted into a linear motion, while the backward efficiency can be made 0%, irrespective of the lead angles of the screw threads, thereby effectively preventing a conversion of a linear motion into a rotary motion.

Moreover, according to the present invention, in the above-mentioned structure 1, it is desirable that one of the screw shaft and the roller nut is supported to be rotatable but not linearly movable, while the other of the screw shaft and the roller nut is supported to be linearly movable but not rotatable, with the number of co-extending threads of the other being varied. (Referred to as structure 2 hereinunder.)

According to this structure, a rotary motion of one of the screw shaft and the roller nut can be correctly and definitely converted into a minute linear motion of the other of the screw shaft and roller nut.

Moreover, according to the present invention, in the above-mentioned structure 2, it is desirable that a carrier is provided so as to cooperate with said one member for holding the planetary screw rollers at predetermined positions around an axis of the screw shaft to be rotatable around their own axes. (Referred to as structure 3 hereinunder.)

According to this structure, the planetary screw rollers are dwfinitely held at predetermined positions around the axis of the screw shaft by the carrier, so that the planetary screw rollers are firmly supported to be rotatable around their own axes.

Moreover, according to the present invention, in the above-mentioned structure 3, it is desirable that the carrier is supported by said one member to be rotatable relative to the screw shaft and the roller nut but not linearly movable relative to said one member. (Referred to as structure 4 hereinunder.)

According to this structure, it is definitely prevented that the planetary screw rollers displace linearly relative to the roller nut, while allowing the planetary screw rollers to rotate relatively to the screw shaft and the roller nut while revolving around the screw shaft.

Moreover, according to the present invention, in the above-mentioned structure 1, it is preferable that the friction loss in the rotation of the planetary screw rollers relatively to the screw shaft and the roller nut through mating of their threads is smaller than the friction loss in sliding of the planetary screw rollers relatively to the screw shaft or the roller nut without the threads mating. (Referred to as structure 5 hereinunder.)

According to this structure, it is ensured that, when the screw shaft and the roller nut rotate relative to one another, the planetary screw rollers rotate relative to the screw shaft and the roller nut by mating of their threads without slipping.

Moreover, according to the present invention, in any one of the above-mentioned structures 1 to 5, it is desirable that the screw shaft, the planetary screw rollers and the roller nut have each helically extending threads around the respective axes, wherein each thread is bilaterally symmetrical as viewed in a section extending along the corresponding axis. (Referred to as structure 6 hereinunder.)

According to this structure, the screw shaft, the planetary screw rollers and the roller nut mutually cooperate to definitely carry out the same reducing function as a planetary gear reduction mechanism, while the screw shaft or the roller nut cooperates with the planetary screw rollers to definitely function as a differential screw.

Moreover, according to the present invention, in the above-mentioned structure 4, it is desirable that a member for preventing foreign material from invading into mating portions between the screw shaft, the planetary screw rollers and the roller nut, said foreign material invasion prevention member being supported to be rotatable relative to the screw shaft and the roller nut but not linearly movable relative to said one member. (Referred to as structure 7 hereinunder.)

According to this structure, the invasion of foreign material into the mating portions of the screw shaft, the planetary screw rollers and the roller nut is effectively prevented, thereby effectively suppressing operational failure of the motion converter due to an invasion of foreign material, while definitely preventing that the foreign material invasion prevention member to inhibit the rotation of the screw shaft, the planetary screw rollers and the roller nut.

Moreover, according to the present invention, in the above-mentioned structure 7, it is desirable that the foreign material invasion prevention member has an engaging surface of a thread-shaped section engaging with the thread of said other member, to be linearly movable and rotatable relatively to and along said other member. (Referred to as structure 8 hereinunder.)

According to this structure, the foreign material invasion prevention member can definitely preclude that the rotation of the screw shaft, the planetary screw rollers and the roller nut is inhibited, while foreign material is definitely prevented from invading into the mating portions of the screw shaft, the planetary screw rollers and the roller nut.

Moreover, according to the present invention, in the above-mentioned structure 7 or 8, it is desirable that the foreign material invasion prevention member is supported by the carrier. (Referred to as structure 9 hereinunder.)

According to this structure, the foreign material invasion prevention member can be supported to rotate but not to linearly move relative to said one member.

Moreover, according to the present invention, in any of the above-mentioned structures 1 to 9, it is desirable that the number of the planetary screw rollers is a quotient resulting from dividing a total sum of the numbers of co-extending threads of the screw shaft and the roller nut by a positive integer. (Referred to as structure 10 hereinunder.)

According to this structure, a plurality of planetary screw rollers can be definitely positioned between the screw shaft and the roller nut to mate therewith.

Moreover, according to the present invention, in the above-mentioned structure 3 or 4, it is desirable that the carrier is made of an oil-bearing metal. (Referred to as structure 11 hereinunder.)

According to this structure, the planetary screw rollers are supported to rotate smoothly around their respective axes, maintaining the desirable supporting conditions for a long period.

Moreover, according to the present invention, in the above-mentioned structure 3 or 4, it is desirable that the carrier has a disk-like shape, made of a vibration-damping steel plate. (Referred to as structure 12 hereinunder.)

According to this structure, the rotary vibration of the planetary screw rollers can be attenuated, definitely improving the silence of operation of the motion converter.

Moreover, according to the present invention, in the above-mentioned structure 9, it is desirable that the carrier and the foreign material invasion prevention member are provided on the opposite sides in an axial direction of the planetary screw rollers. (Referred to as structure 13 hereinunder.)

According to this structure, the planetary screw rollers can be definitely held at predetermined positions around the axis of the screw shaft, definitely supporting the planetary screw rollers while allowing them to rotate around the respective axes, with the invasion of foreign material into the mating portions of the screw shaft, the planetary screw rollers and the roller nut being definitely prevented.

Moreover, according to the present invention, in any of the above-mentioned structures 1 to 12, it is desirable that first and second motion conversion units having a structure of the planetary differential screw type rotary/linear motion converter described in any of structures 1 to 12 are provided, with the directions of screw threads of the screw shaft, the planetary screw rollers and the roller nut in the first motion conversion unit being opposite to those of the screw shaft, the planetary screw rollers and the roller nut in the. second motion conversion unit, wherein the screw shafts of the first and second motion conversion units are mutually aligned and integrally connected with each other; while the roller nuts of the first and second motion conversion units are mutually aligned and integrally connected with each other; and the planetary screw rollers of the first and the second motion conversion units are mutually spaced apart along the axis of the screw shaft. (Referred to as structure 14 hereinunder.)

In a planetary differential screw type rotary/linear motion converter of any of the above-mentioned structures 1 to 12, since the thread winding directions of the screw shaft and the planetary screw rollers are opposite to each other, if the mating portions between the screw shaft and the planetary screw rollers slide in a linear direction, the planetary screw rollers tend to revolve in the direction opposite to the normal revolution, thereby generating a rotary force acting on the roller nut in the direction opposite to the normal direction. In contrast, according to the above-mentioned structure 14, the rotary forces acting on the roller nuts in the direction opposite to the normal direction in the respective units are cancelled between the roller nuts of the first and the second motion conversion units, so that the sliding in the linear direction between the screw shaft and the planetary screw rollers is mechanically definitely prevented.

Moreover, according to the present invention, in the above-mentioned structure 14, it is desirable that the foreign material invasion prevention member is provided near each end portion of opposite sides of the planetary screw rollers of the first and the second motion conversion units. (Referred to as structure 15 hereinunder.)

According to this structure, there is no need to provide the foreign material invasion prevention member at the mutually closer end portions of the planetary screw rollers of the first and the second motion conversion units, while preventing any invasion of foreign material at any end portion existing in the motion converter.

Moreover, according to the present invention, in the above-mentioned structure 1, it is desirable that. denoting Ds, Dp and Dn to be effective screw diameters of the screw shaft, the planetary screw roller and the roller nut, respectively, and Ns, Np and Nn to be the number of co-extending threads of the screw shaft, the planetary screw rollers and the roller nut, respectively, when the relationship between the effective screw diameters and the number of co-extending threads with respect to the screw shaft, the planetary screw rollers and the roller nut which induces no linear displacement among the screw shaft, the planetary screw rollers and the roller nut even when the screw shaft or the roller nut rotates relative to the other satisfies a relationship such as Ns:Np:Nn=Ds:Dp:Dn, the number of co-extending threads of the screw shaft or the number of co-extending threads of the roller nut is varied to be larger by 1 or smaller by 1 than the number which satisfies said relationship. (Referred to as structure 16 hereinunder.)

Moreover, according to the present invention, in the above-mentioned structure 2, it is desirable that the roller nut is supported to be rotatable but not linearly movable, the screw shaft is supported to be not rotatable but linearly movable, and the number of co-extending threads of the screw shaft is varied. (Referred to as structure 17 hereinunder.)

Moreover, according to the present invention, in the above-mentioned structure 2, it is desirable that the screw shaft is supported to be rotatable but not linearly movable, the roller nut is supported to be not rotatable but linearly movable, and the number of co-extending threads of the roller nut is varied. (Referred to as structure 18 hereinunder.)

Moreover, according to the present invention, in the above-mentioned structure 2, it is desirable that, even when a force is applied to the other member in the direction of a linear displacement, said one member does not rotate. (Referred to as structure 19 hereinunder.)

Moreover, according to the present invention, in the above-mentioned structure 4, it is desirable that the carrier is supported by the roller nut to be rotatable relative to the screw shaft and the roller nut but not linearly movable relative to the roller nut. (Referred to as structure 20 hereinunder.)

Moreover, according to the present invention, in the above-mentioned structure 4, it is desirable that the carrier is supported by the screw shaft to be rotatable relative to the screw shaft and the roller nut but not linearly movable relative to the screw shaft. (Referred to as structure 21 hereinunder.)

Moreover, according to the present invention, in the above-mentioned structure 7, it is desirable that the foreign material invasion prevention member is made of a rubber-like elastic material. (Referred to as structure 22 hereinunder.)

Moreover, according to the present invention, in the above-mentioned structure 7, it is desirable that the foreign material invasion prevention member is supported to be rotatable relative to the screw shaft and the roller nut but not linearly movable relative to the roller nut. (Referred to as structure 23 hereinunder.)

Moreover, according to the present invention, in the above-mentioned structure 7, it is desirable that the foreign material invasion prevention member is supported to be rotatable relative to the screw shaft and the roller nut but not linearly movable relative to the screw shaft. (Referred to as structure 24 hereinunder.)

Moreover, according to the present invention, in the above-mentioned structure 8, it is desirable that the engaging surface of the foreign material invasion prevention member is elastically biased to the threads of the other member. (Referred to as structure 25 hereinunder.)

Moreover, according to the present invention, in the above-mentioned structure 9, it is desirable that the foreign material invasion prevention member is removably attached to the carrier. (Referred to as structure 26 hereinunder.)

Moreover, according to the present invention, in the above-mentioned structure 10, it is desirable that the foreign material invasion prevention member is located at a side opposite to the planetary screw rollers with respect to the carrier. (Referred to as structure 27 hereinunder.)

Moreover, according to the present invention in either of the above-mentioned structures 1 to 27, it is desirable that the planetary screw rollers and roller nut are adapted to transmit rotary motions therebetween by a gear structure comprising an external gear provided on the planetary screw rollers and an internal gear provided on the roller nut and mating with the external gear, in addition to the threads of the same direction. (Referred to as structure 28 hereinunder.)

Moreover, according to the present invention, in the above-mentioned structure 28, it is desirable that the axis of the external gear is aligned with the axis of the planetary screw roller, and the diameter of the standard pitch circle of the external gear is equal to the standard screw diameter of the planetary screw roller. (Referred to as structure 29 hereinunder.)

Moreover, according to the present invention, in the above-mentioned structure 28 or 29, it is desirable that the gear ratio of the external gear and the internal gear is equal to the ratio of the effective screw diameters of the external gear and the internal gear. (Referred to as structure 30 hereinunder.)

Moreover, according to the present invention, in either of the above-mentioned structures 28 to 30, it is desirable that the gear ratio of the external gear and the internal gear is equal to the ratio of the numbers of co-extending threads of the external gear and the internal gear. (Referred to as structure 31 hereinunder.)

Moreover, according to the present invention, in either of the above-mentioned structures 28 to 31, it is desirable that the external gear is integrally formed in at least one end portion of the planetary screw roller and the internal gear is fixed to the roller nut. (Referred to as structure 32 hereinunder.)

Moreover, according to the present invention, in either of the above-mentioned structures 28 to 32, it is desirable that the external gears are formed at opposite ends of the planetary screw roller, and there is a phase difference larger than 0° and smaller than 360° between the tooth shapes of the two external gears. (Referred to as structure 33 hereinunder.)

Moreover, according to the present invention, in the above-mentioned structure 33, it is desirable that the phase difference is larger than 90° and smaller than 270°. (Referred to as structure 34 hereinunder.).

Moreover, according to the present invention, in the above-mentioned structure 34, it is desirable that the phase difference is 180°. (Referred to as structure 35 hereinunder.)

Moreover, according to the present invention, in either of the above-mentioned structures 28 to 35, it is desirable that the teeth of the external gear define a part of the thread of the planetary screw roller. (Referred to as structure 36 hereinunder.)

Moreover, according to the present invention, in either of the above-mentioned structures 28 to 35, it is desirable that the external gear is provided in at least one end portion of the planetary screw roller; the teeth of the internal gear is defined by a plurality of rotary bodies each being rotatable at least around an axis parallel to the axis of the roller nut and mating with the teeth of the external gear. (Referred to as structure 37 hereinunder.)

Moreover, according to the present invention, in either of the above-mentioned structures 1 to 37, it is desirable that the shapes of the threads of the screw shaft and the planetary screw rollers have parts of a common pressure angle in a cross section taken along the axis of the screw shaft. (Referred to as structure 38 hereinunder.)

Moreover, according to the present invention, in the above-mentioned structure 38, it is desirable that the threads of the screw shaft and the planetary screw rollers have mean helical angles of thread calculated based upon pitches, effective screw diameters and number of co-extending threads, mean pressure angles calculated based the mean helical angles, and thread flank angles calculated based on the mean pressure angles and the mean helical angles. (Referred to as structure 39 hereinunder.)

Moreover, according to the present invention, in the above-mentioned structure 39, it is desirable that the thread number difference of the screw shaft is a positive value; the thread of the roller nut has a trapezoidal thread shape; a thread flank angle at a tooth tip portion of the planetary screw roller and a thread flank angle at a tooth root portion of the screw shaft are the same as a thread flank angle of the roller nut; and a mean value of the thread flank angle at a tooth root portion of the planetary screw roller and a mean value of the thread flank angle at a tooth tip portion of the screw shaft are the same as a thread flank angle of the roller nut. (Referred to as structure 40 hereinunder.)

Moreover, according to the present invention, in the above-mentioned structure 39, it is desirable that the thread number difference of the screw shaft is a negative value; the thread of the roller nut has a trapezoidal thread shape; a thread flank angle of the planetary screw roller and a thread flank angle at a tooth tip portion of the screw shaft are the same as a thread flank angle of the roller nut; and a thread flank angle at a tooth root portion of the screw shaft is a smaller one of two thread flank angles calculated based upon the mean pressure angles and the mean helical angles. (Referred to as structure 41 hereinunder.)

Moreover, according to the present invention, in either of the above-mentioned structure 1 to 41, it is desirable that end faces of opposite axial ends of the planetary screw roller have holes aligned to an axis; and the carrier has a plurality of projections, wherein the projections are fitted into the holes to support the planetary screw roller to be rotatable around the axis. (Referred to as structure 42 hereinunder.)

Moreover, according to the present invention, in the above-mentioned structure 42, it is desirable that the holes and the projections have tapered shapes. (Referred to as structure 43 hereinunder.)

Moreover, according to the present invention, in the above-mentioned structure 42 or 43, it is desirable that the carrier has the side supporting portion which partially surrounds and supports a side of an end portion of the planetary screw roller. (Referred to as structure 44 hereinunder.)

Moreover, according to the present invention, in either of the above-mentioned structures 42 to 44, it is desirable that the carrier is made of an oil-bearing metal. (Referred to as structure 45 hereinunder.)

Moreover, according to the present invention, as a method for assembling a planetary differential screw type rotary/linear motion converter of either of the above-mentioned structures 1 to 41, it is desirable that a plurality of the planetary screw rollers are supported by a holder to be in a predetermined spatial relationship relative to one another and rotatable around their own axes, and the holder is inserted into the roller nut together with the planetary screw rollers while being rotated. (Referred to as method 1 hereinunder.)

Moreover, according to the present invention, as a method for assembling a planetary differential screw type rotary/linear motion converter of the above-mentioned structure 32, it is desirable that a plurality of the planetary screw rollers are supported by a holder to be in a predetermined spatial relationship relative to one another and rotatable around their own axes, the holder is inserted into the roller nut together with the planetary screw rollers while being rotated, and the internal gear is fixed to the roller nut in a condition mated with the external gear. (Referred to as method 2 hereinunder.)

Moreover, according to the present invention, in the above-mentioned method 1 or 2, it is desirable that the holder has a first support portion which rotatably supports one ends of the planetary screw rollers, a second support portion which rotatably supports the other ends of the planetary screw rollers, and a connection portion which integrally connects the first and the second support portions. (Referred to as method 3 hereinunder.)

Moreover, according to the present invention, in the above-mentioned method 3, it is desirable that the holder is used for assembling the planetary differential screw type rotary/linear motion converter of the above-mentioned structure 33; the one ends and the other ends of the planetary screw rollers have each first and second shaft portions of mutually different outside diameters, and the first and second support portions each have openings of inner diameters corresponding to the diameters of the first and second shaft portions. (Referred to as method 4 hereinunder.)

Moreover, according to the present invention, in either of the above-mentioned methods 1 to 4, it is desirable that the holder serves as a carrier which cooperates with one of the members to hold the planetary screw rollers in predetermined positions around the axis of the screw shaft to be rotatable around their axes when the planetary differential screw type rotary linear motion converter has been assembled. (Referred to as method 5 hereinunder.)

Moreover, according to the present invention, in any one of the above-mentioned methods 1 to 5, it is desirable that the holder is made of a resin. (Referred to as method 6 hereinunder.)

Brief Description of the Drawings

Fig. 1 is a longitudinal sectional view of a first embodiment of the planetary differential screw type rotary/linear motion converter in accordance with the present invention constructed to carry out a conversion of a rotary motion of a roller nut into a linear motion of a screw shaft.

Fig. 2 is a plane sectional view showing the principal part of the first embodiment in a state that the screw shaft is removed.

Fig. 3 shows a right side view (right half) and a sectional view perpendicular to an axis (left half) of the first embodiment.

Fig. 4 is a left side view of the first embodiment.

Fig. 5 is an enlarged partial sectional view showing an external thread of a screw shaft in a cross section parallel to the axis of the screw shaft.

Fig. 6 is an explanatory diagram showing an operational principle of the first embodiment, in which, especially (A) shows the rotational direction of a screw shaft, a roller nut, planetary screw rollers and a carrier, seen from the right side of the rotary/linear motion converter of Fig. 1; and (B) shows the direction of the thrust motion of the screw shaft, the roller nut and the planetary screw rollers, while the carrier is fixed, seen from the upper right side of the rotary/linear motion converter of Fig. 1.

Fig. 7 is a longitudinal sectional view showing a second embodiment of the planetary differential screw type rotary/linear motion converter according to the present invention, constructed to carry out a conversion of a rotary motion of a roller nut to a linear motion of a screw shaft.

Fig. 8 is a longitudinal sectional view showing a third embodiment of the planetary differential screw type rotary/linear motion converter in accordance with the present invention constructed as a modified embodiment of the first embodiment.

Fig. 9 is a longitudinal sectional view showing a fourth embodiment of the planetary differential screw type rotary/linear motion converter in accordance with the present invention constructed to carry out a conversion of a rotary motion of a screw shaft to a linear motion of a roller nut.

Fig. 10 is a longitudinal sectional view showing a fifth embodiment of the planetary differential screw type rotary/linear motion converter in accordance with the present invention constructed to carry out a conversion between a rotary motion of a screw shaft and a linear motion of a roller nut.

Fig. 11 shows a sixth embodiment of the planetary differential screw type rotary/linear motion converter in accordance with the present invention constructed to carry out a conversion of a rotary motion of a screw shaft to a linear motion of a roller nut, in which, especially (A) is a longitudinal sectional view taken along an axis, and (B) is a cross sectional view of the sixth embodiment taken along line B-B in (A) by removing the screw shaft along line B-B of (A).

Fig. 12 shows an enlarged front view (A), an enlarged left side view (B), and an enlarged right side view (C) of the planetary screw roller shown in Fig. 11.

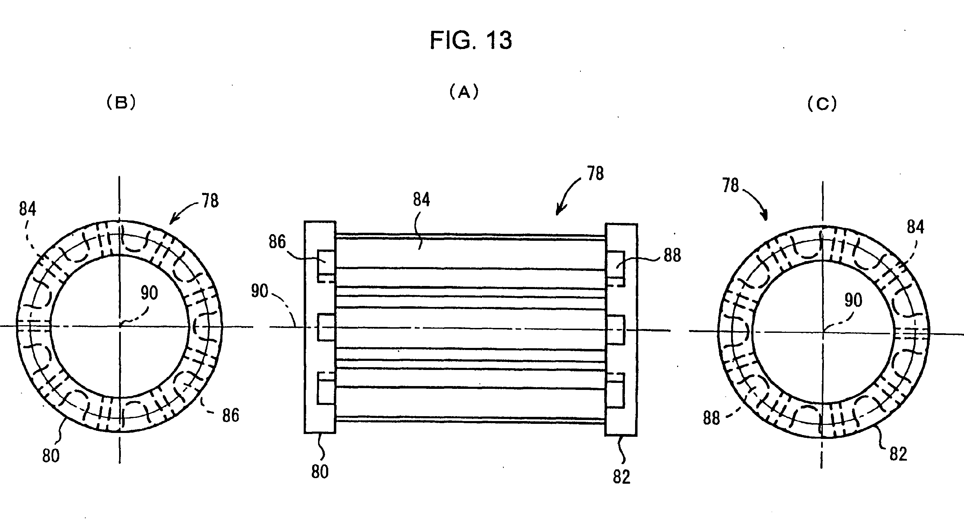

Fig. 13 shows a front elevation (A), a left side view (B) and a right side view (C) of the carrier shown in Fig. 11.

Fig. 14 is an enlarged partial sectional view along the axis of each screw shown in Fig. 11, in which (A) shows a female thread of the roller nut, (B) shows a male thread of the planetary screw roller, and (C) shows a male thread of the screw shaft.

Fig. 15 is a cross sectional view showing the mating state of the female thread of the roller nut and the male thread of the planetary screw roller in (A), and the mating state of the male thread of the planetary screw rollers and the male thread of the screw shaft in (B), in a case that the thread number difference of Ns of the screw shaft is +1.

Fig. 16 is an enlarged cross sectional view indicating a section perpendicular to the axis of a longitudinal central portion of the motion converter according to the sixth embodiment.

Fig. 17 is an enlarged partial sectional view along the axis of each screw in a case that the thread number difference of Ns of the screw shaft is -1, in which (A) shows a female thread of the roller nut; (B) shows a male thread of the planetary screw roller; and (C) shows a male thread of the screw shaft.

Fig. 18 is a sectional view showing the mating state of a female thread of the roller nut and a male thread of the planetary screw roller in (A), and the mating state of a male thread of the planetary screw roller and a male thread of the screw shaft in (B), in a case that the thread number difference of Ns of the screw shaft is -1.

Fig. 19 is a front view showing a carrier supporting planetary screw rollers.

Fig. 20 is a sectional view showing a condition that the planetary screw rollers are inserted into the roller nut to a predetermined position, with two spur gears being inserted into the roller nut and fixed by press fit, so that the two spur gears mate with the corresponding internal gears.

Fig. 21 is a sectional view similar to Fig. 11 (B), showing a seventh embodiment of the planetary differential screw type rotary/linear motion converter in accordance with the present invention constructed as a modified embodiment of the sixth embodiment.

Fig. 22 is a partial longitudinal sectional view (A), a partial left side view (B) and a partial top view (C) of an eighth embodiment of the planetary differential screw type rotary/linear motion converter in accordance with the present invention constructed as a modified embodiment of the sixth embodiment.

Description of the Embodiments

In the following, the present invention will be explained in detail in the form of some preferred embodiments by referring to the drawings.

First Embodiment

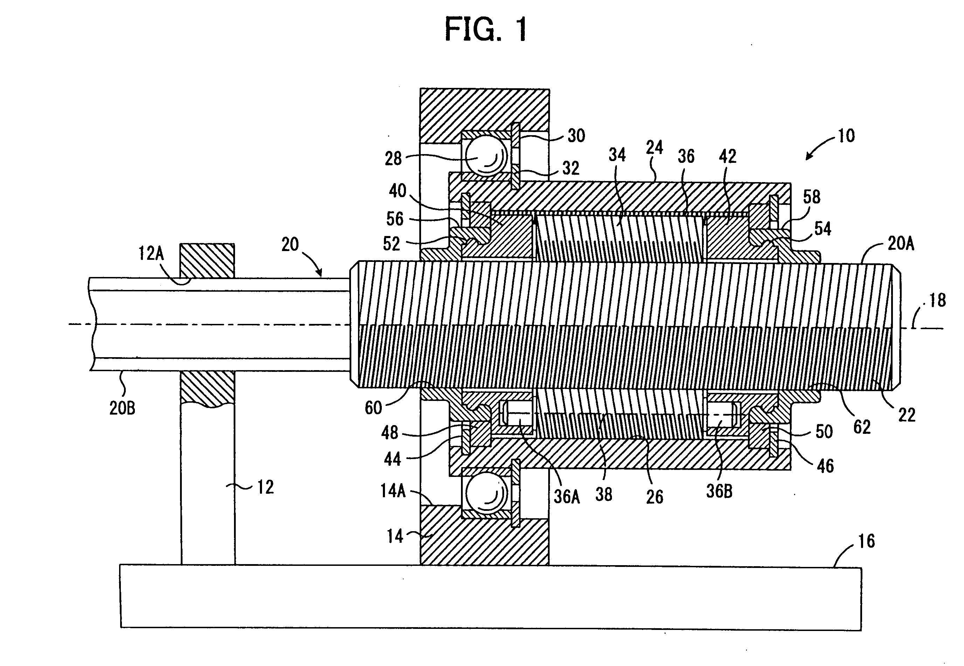

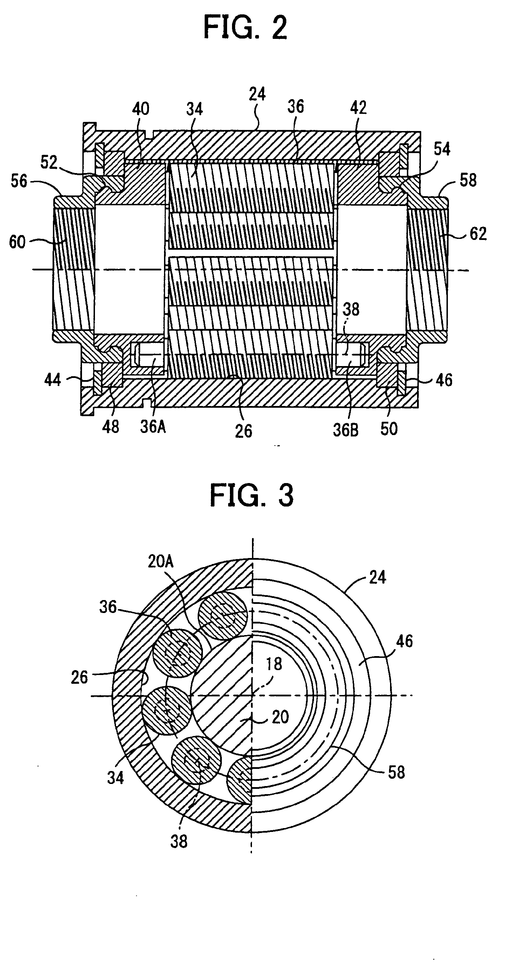

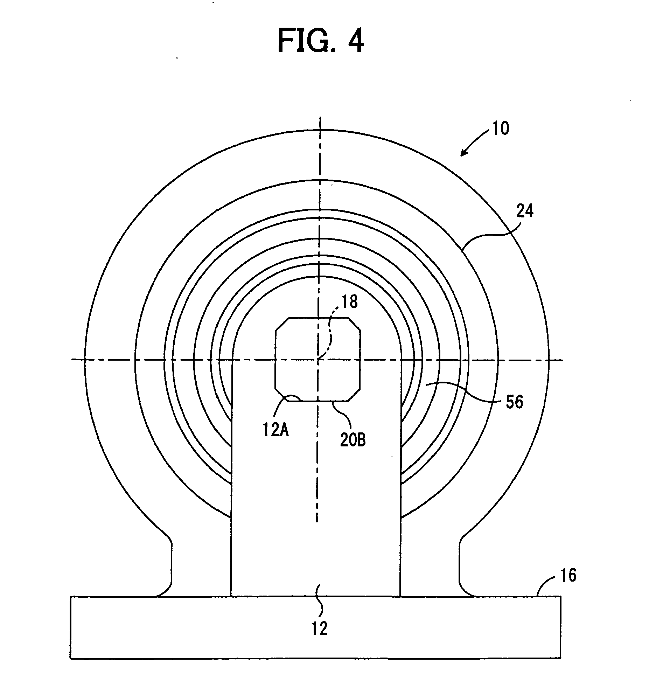

Fig. 1 is a longitudinal sectional view showing the first embodiment of the planetary differential screw type rotary/linear motion converter according to the present invention constructed to convert a rotary motion of a roller nut to a linear motion of a screw shaft; Fig. 2 is a plane sectional view showing the main part of the first embodiment in a condition that the screw shaft is removed; Fig. 3 shows a right side view of the first embodiment (right) and a section perpendicular to an axis (left), and Fig. 4 is a left side view of the first embodiment.

In these drawings, 10 generally designates a planetary differential screw type rotary/linear motion converter, supported by a base 16 via two supporting columns 12 and 14. The rotary/linear motion converter 10 comprises a screw shaft 20 extending along an axis 18 and having a screw section 20A, a male thread 22, and a shaft portion 20B prevented against rotation and formed integrally with the screw section 20A.

The screw section 20A is inserted into a substantially tubular roller nut 24 extending along the axis 18, and has an axial length longer than that of the roller nut 24. The rotation-prevented shaft portion 20B, having a square cross-sectional shape with beveled corners, is inserted into a through-hole 12A of a corresponding cross-sectional shape, formed in a supporting column 12, thereby supported by the supporting column 12, while allowing a linear movement of the portion 20B along the axis 18 but preventing a rotation of the portion 20B around the axis 18.

The roller nut 24 has a female thread 26 in its inner peripheral surface, and is inserted into a through-hole 14A formed in the supporting column 14 and supported thereby to be rotatable around the axis 18 through a ball bearing 28. Outer and inner races of the ball bearing 28 are fixed to the supporting column 14 and the outer periphery of one end of the roller nut 24 with C rings 30 and 32, respectively.

Between the screw shaft 20 and the roller nut 24, there are provided a plurality of planetary screw rollers 36 each having a male thread 34 and extending along an axis 38 parallel to the axis 18 with a length shorter than that the roller nut 24. In the illustrated embodiment, nine of the planetary screw rollers 36 are provided and circumferentially spaced apart from one another at an equal interval around the axis 18. Each planetary screw roller 36 has cylindrical shaft portions 36A and 36B at opposite ends thereof, and are supported by annular carriers 40 and 42 at the shaft portions 36A and 36B, the annular carriers 40 and 42 surrounding the screw shaft 20, wherein each planetary screw roller 36 is allowed to rotate around the axis 38, while revolving around the axis 18 but prevented from displacing in the linear directions relative to the roller nut 24.

The carriers 40 and 42 have a larger inner diameter than the male thread 22 of the screw shaft 20, and an outer diameter smaller than the female thread 26 of the roller nut 24, and can rotate freely around the axis 18 relatively to the screw shaft 20 and the roller nut 24. Moreover, the carriers 40 and 42 are made of a material having a low frictional coefficient like an oil-bearing metal, and are prevented from moving axially outwardly by stopper rings 48 and 50 fixed to the roller nut 24 with C rings 44 and 46, respectively.

The carriers 40 and 42 have each a sleeve portion extending axially outwardly with an outer peripheral surface formed of annular projections 52 and 54, respectively, these annular projections having each a substantially semi-circler cross-sectional shape and extending circumferentially. Around the sleeve portions of carriers 40 and 42, members 56 and 58 made of a rubber-like elastic material having an elasticity like resin or rubber are fitted for preventing invasion of foreign material. The foreign material invasion prevention members 56 and 58 are supported by the carriers 40 and 42 by the projections 52 and 54 being fit into recesses of the members 56 and 58, so that the members 56 and 58 are releasable from the carriers 40 and 42, i.e. exchangeable. The foreign material invasion prevention members 56 and 58 have each a sleeve portion extending axially outwardly from the carriers 40 and 42, the sleeve portions having female threads 60 and 62, respectively, elastically biased to, and mating with, the male thread 22 of the screw shaft 20.

The helically winding directions of the female thread 26 of the roller nut 24 and the male thread 34 of each of the planetary screw rollers 36 are same, but the helically winding directions of the male thread 22 of the screw shaft 20 and the male thread 34 of the planetary screw rollers 36 are opposite to each other. The male thread 34 of each planetary screw roller 36 mates with both the male thread 22 of the screw shaft 20 and the female thread 26 of the roller nut 24. When the roller nut 24 rotates around the axis 18 relatively to the screw shaft 20, the planetary screw rollers 36 rotate relatively to the screw shaft 20 and the roller nut 24 through engagement of the threads without slipping.

In this connection, the condition that "the planetary screw rollers 36 rotate relatively to the screw shaft 20 and the roller nut 24 through the engagement of the threads without slipping" is achieved by optionally setting up pitch angles, etc. of the respective threads in relation to the frictional coefficient, etc. of the threads so as to render "the frictional loss in the rotation of the planetary screw rollers 36 relatively to the screw shaft 20 and the roller nut 24 through the engagement of the threads" to be smaller than "the frictional loss in the slipping of the planetary screw rollers 36 relatively to the screw shaft 20 or the roller nut 24 without rotating relatively to the screw shaft 20 or the roller nut 24."

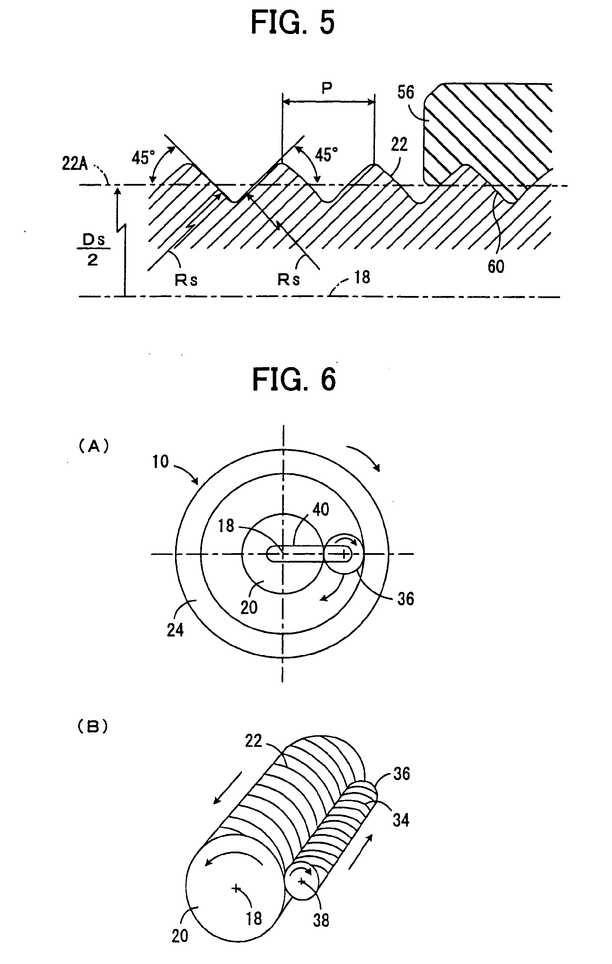

Fig. 5 is an enlarged partial sectional view showing the male thread 22 of the screw shaft 20, taken by a section parallel to the axis 18. In this connection, in Fig. 5, the two dashes line 22A shows the position of the effective screw diameter. As seen in Fig. 5, the male thread 22, helically extending around the axis 18, has a thread form substantially of an isosceles triangle with a rounded tip having an interposed angle of 90°. Moreover, the flanks of the male thread 22 are formed to be symmetrical in a section taken along the axis 18, instead of in a section perpendicular to the direction of extension of the thread. Furthermore, each slope of the thread flank is of a arc shape with a radius Rs in the section taken along the axis 18, and the tilting angle relative to the axis 18 of each thread flank at the position of the effective screw diameter 22A is 45°.

Further, the female thread 26 of the roller nut 24 and the male thread 34 of the planetary screw rollers 36 are formed to be similar to the male thread 22 of the screw shaft 20, and therefore, the male thread 22 of the screw shaft 20 and the male thread 34 of the planetary screw roller 36, and the male thread 34 of the planetary screw roller 36 and the female thread 26 of the roller nut 24 maintain a condition that, irrespective of the rotational directions and the rotational angles thereof, they are always in point-contact with one another substantially at positions of the respective effective screw diameters and axially spaced by the pitch. The female threads 60 and 62 of the foreign material invasion prevention members 56 and 58 have sectional shapes substantially closely contactable with the male thread 22 of the screw shaft 20.

Moreover, while the male thread 22 of the screw shaft 20, the female thread 26 of the roller nut 2, and the male thread 34 of the planetary screw rollers 36 are multi co-extending threads having the same pitch, the number of co-extending threads of the screw shaft 20 is set to be increased or decreased by 1 from such a relationship of the numbers of co-extending threads and the effective screw diameters of the screw shaft 20, the planetary screw rollers 36 and roller nut 24 that induces no linear displacement among the screw shaft 20, the planetary screw rollers 36 and the roller nut 24 in spite of a rotation of the roller nut 24. In other words, the thread difference number of the screw shaft 20 is +1 or -1.

Accordingly, denoting the effective screw diameters of the screw shaft 20, the planetary screw rollers 36, and the roller nut 24 as Ds, Dp and Dn, respectively, and the number of co-extending threads of the screw shaft 20, the planetary screw rollers 36 and the roller nut 24 as Ns, Np, and Nn, respectively, the relationship of the numbers of co-extending threads and the effective screw diameters with respect to the screw shaft 20, the planetary screw rollers 36 and the roller nut 24 that induces no linear displacement among the screw shaft 20, the planetary screw rollers 36 and the roller nut 24 in spite of rotation of the roller nut 24 satisfies a relation such as Ns:Np:Nn=Ds:Dp:Dn, and based upon this, the number of co-extending threads of the screw shaft 20 is set to be larger or smaller by 1 relative to the value of Ns which satisfies the above-mentioned relationship. In the first embodiment herein illustrated, the thread number difference of the screw shaft 20 is -1.

As seen from the above explanation, the screw shaft 20, the planetary screw rollers 36, the roller nut 24, and the carriers 40 and 42 cooperate to construct a reduction mechanism similar to a planetary gear reduction mechanism, and also simultaneously to construct a differential screw mechanism by which a linear displacement of the screw shaft 20 along the axis 18 relative to the roller nut 24 and planetary screw rollers 36 occurs owing to the thread number difference of the screw shaft 20.

Fig. 6 is an explanatory diagram showing the operation principle of the first embodiment, in which Fig. 6 (A) shows rotational directions of the screw shaft 20, the planetary screw roller 36, the roller nut 24, and the carriers 40 and 42 in the rotary/linear motion converter 10, seen from the right-hand side of Fig. 1, and Fig. 6 (B) shows the linear moving direction of the screw shaft 20 and the planetary screw roller 36 in the rotary/linear motion converter 10 seen from the upper right side of Fig. 1, provided that the roller nut 24 are axially fixed.

As shown in Fig. 6 (A), since the screw shaft 20 does not rotate, the rotation of the roller nut 24 around the axis 18 in the clockwise direction causes the planetary screw rollers 36 to revolve clockwise around the screw shaft 20 while rotating clockwise around the respective axes 38, the carriers 40 and 42 rotating clockwise around the axis 18.

As shown in Fig. 6 (B), assuming that the carriers 40 and 42 are axially fixed, when the planetary screw rollers 36 having a right-hand screw thread are rotated clockwise around their axes 38, the planetary screw rollers 36 tends to move in the linear direction of fastening the right-hand screw thread, whereby the screw shaft 20 having a left-hand screw thread mating with the roller 36 tends to move in the forwardly oriented linear direction as viewed in the figure while rotating counterclockwise around the axis 18.

Thus, when the roller nut 24 rotates in the clockwise direction around the axis 18, a linear displacement of the screw shaft 20 toward the front side occurs as much as the thread number difference of -1, while, when the roller nut 24 rotates in the counterclockwise direction around the axis 18, a linear displacement of the screw shaft 20 occurs toward the back side.

In contrast, when the thread number difference of the screw shaft 20 is +1, the screw shaft 20 will move in the direction opposite to the above-mentioned case. Moreover, when the thread number difference of the roller nut 24 is +1 and the roller nut 24 rotates in the clockwise direction around the axis 18, a linear displacement of the screw shaft 20 occurs toward the front side, and, when the roller nut 24 rotates in the counterclockwise direction around the axis 18, a linear displacement of the screw shaft 20 occurs toward the back side.

The magnitude of the linear displacement of the screw shaft 20 relative to the planetary screw rollers 36 is one thread per one revolution of the planetary screw rollers 36, i.e. the pitch P of the thread, and since the number of revolution of the planetary screw rollers 36 per one rotation of the roller nut 24 is the quotient obtained by dividing "the effective screw diameter Dn of the roller nut 24" by "the sum of the effective screw diameter Ds of the screw shaft 20 and the effective thread diameter Dn of the roller nut 24", the magnitude Ls of the linear displacement of the screw shaft 20 per one rotation of the roller nut 24 is expressed by the following formula 1.

$$Ls=P \cdot Dn/(Ds+Dn) \ .... \ (1)$$

In the illustrated first embodiment, for example, assuming that the pitch P is 1mm, the male thread 34 of the planetary screw roller 36 is right-hand and has the effective screw diameter of 7mm and 4 co-extending threads (Np = 4), the female thread 26 of the roller nut 24 is right-handed and has the effective screw diameter Dn of 31.5mm, that is 4.5 times of that of the planetary screw roller, and 18 co-extending threads (Nn = 18), and the male thread 22 of the screw shaft 20 is left-handed and has the effective screw diameter Ds of 17.5mm, that is 2.5 times of that of the planetary screw roller, and a co-extending thread number which is smaller by one than the number of co-extending threads Ns=10, namely, 2.5x4 times Np, which satisfies the condition that no relative linear displacement occurs between the screw shaft 20 and the planetary screw roller 36, the magnitude Ls of the linear displacement of the screw shaft 20 per one rotation of the roller nut 24 is 31.5/49 mm according to the above-mentioned formula 1.

In this connection, the number of the planetary screw rollers 36 in the illustrated first embodiment is nine as described above. This value is the quotient resulting from dividing 27, the sum of the number of co-extending threads of the screw shaft 20 and that of the roller nut 24, by a positive integer 3 in the above-mentioned example. When the number of the planetary screw rollers 36 is equal to a value (positive integer) resulting from the division of the total sum of the numbers of co-extending threads of the screw shaft 20 and the roller nut 24 by a positive integer, the planetary screw rollers 36 can be arranged to be circumferentially equally spaced apart from one another around the axis 18.

Thus, according to the illustrated first embodiment, the screw shaft 20, the planetary screw rollers 36 and the roller nut 24 cooperate to carry out the same reducing function as a planetary gear reduction mechanism, and the screw shaft 20 cooperates with the planetary screw rollers 36 to function as a differential screw, and further, by such supports of the screw shaft 20 and the roller nut 24 that the screw shaft 20 is not rotatable but movable in the linear directions, while the roller nut 24 is rotatable but not movable in the linear directions, the conversion of a rotary motion of the roller nut 24 into a minute linear motion of the screw shaft 20 is available with an exact and definite correspondence between the rotational angle and the linear displacement.

In this respect, in order to explain the difference between the device of the first embodiment and the device described in the above-mentioned US Patent No. 3,173,304, the difference in the linear displacement in both devices will be explained about a case wherein the pitch of the screw is 1mm and the effective screw diameters of the screw shaft, the planetary screw rollers and the roller nut are 20mm, 5mm and 30mm, respectively.

In US patent No. 3,173,304, the planetary screw rollers are of one-thread screw whose pitch is 1mm, the thread of the roller nut is a male thread having 6 co-extending threads directed in the same direction, and the thread of the screw shaft is a male threads having 6 co-extending threads directed in the same direction. In this case, the linear displacement of the screw shaft by one rotation of the roller nut is 6mm, irrespective whether the planetary screw rollers rotate or not.

On the other hand, in the case of the first embodiment, the threads of the planetary screw rollers 36 and the roller nut 24 are in the same winding, but the thread of the screw shaft 20 is opposite to that of the planetary screw rollers. It is assumed that the number of co-extending threads of the screw shaft is five, resulting from adding 1 to 4, i.e. the ratio of the effective screw diameters of the screw shaft 20 to the planetary screw rollers 36. That is, no linear displacement occurs when the screw shaft 20 is a four-co-extending threads screw, but the provision of a thread number difference of 1 generates a difference in the lead angle between the screw shaft 20 and the planetary screw rollers 36, inducing a linear displacement of the screw shaft 20. This linear displacement, as mentioned above, corresponds to the pitch of the thread number difference (thread number difference x screw pitch) for one revolution of the planetary screw roller 36 around the screw shaft 20.

Therefore, when the roller nut 24 rotates one time, the planetary screw rollers 36 make an orbital motion of 0.6 rotation around the screw shaft 20, which generates a linear displacement of 0.6mm between the screw shaft 20 and the planetary screw rollers 36. In other words, even when the sizes and the thread pitch are the same as in the structure of the above-mentioned US patent No. 3,173,304, the linear displacement of the screw shaft 20 is made very small such as 1/10 of the device described in US patent No. 3,173,304.

As the conventional rotary/linear motion conversion mechanisms, there exist a slide screw using a frictional sliding, a ball screw using a frictional rolling, a planetary roller screw using a frictional sliding and a frictional rolling, and a circulation-typed roller screw, etc. The forward efficiencies and the backward efficiencies in these rotary/linear motion conversion mechanisms are dependent on the respective frictions, and in turn, the lead angle of the screws used therein. Therefore, those which have a good forward efficiency such as about 90% have also a good backward efficiency. Therefore, when in such a device a linear kinetic energy should not be inversely converted into a rotational kinetic energy, the forward efficiency must unavoidably fall to be less than about 50%. In other words, a reverse conversion can not be prevented without lowering the forward efficiency.

In contrast, according to the first embodiment shown in the figure, turning over the physical common sense in the conventional rotary/linear motion conversion mechanism, it is possible to obtain a high forward efficiency such as 80% without depending upon the lead angle of the screw, so that the rotary motion of the roller nut 24 can be efficiently converted into a linear motion of the screw shaft 20, with a backward efficiency of 0 without depending upon the lead angle of the screw, thereby effectively preventing that a linear motion of the screw shaft 20 is converted into a rotary motion of the roller nut 24.

As described above, the winding directions of the male thread 22 of the screw shaft 20 and the male thread 34 of the planetary screw rollers 36 are opposite to one another, and the shapes of these threads are symmetrical as viewed in the section extending along the axis 18. Therefore, the mating between the male thread 22 of the screw shaft 20 and the male thread 34 of the planetary screw rollers 36 is not strictly a "screw mating" but a "gear meshing" of two helical gears having different lead or spiral angles. When two helical gears of different spiral angles rotate by meshing, a relative linear displacement occurs therebetween, whereby the screw shaft 20 makes a linear displacement according to this phenomenon. Therefore, according to the first embodiment shown in the figure, it is possible to make the efficiency of conversion of a rotation of the roller nut 24 to a linear displacement of the screw shaft 20, i.e. the forward efficiency, to be more than 80% which is the mechanical efficiency of the helical gears.

Since the male thread 22 of the screw shaft 20 and the male thread 34 of the planetary screw rollers 36 mate in the "gear meshing" of two helical gears as described above, it does not occur that a linear displacement of one of the screw shaft 20 and the planetary screw roller 36 is converted into a rotary motion of the other even when their helical angles are different from one another. Therefore, even when a thrust force is applied to one of the screw shaft 20 and the planetary screw rollers 36, a compression stress is only applied to the mating portions of the opposite threads. In other words, a trial to rotate one of the screw shaft 20 and the planetary screw rollers 36 by applying a thrust force to the other of them fails. Therefore, according to the first embodiment shown in the figure, it is possible to make the efficiency of converting a linear displacement of the screw shaft 20 to a rotary motion of the roller nut 24, i.e. the backward efficiency, be definitely 0.

According to the first embodiment shown in the figure, the carriers 40 and 42 are provided so as to cooperate with the roller nut 24 by supporting the planetary screw rollers 36 at the predetermined positions around the screw shaft 20 to be rotatable around their respective axes 36, wherein the carriers 40 and 42 are supported by the roller nut 24 to be rotatable relative thereto but not linearly movable relative thereto, so that the carriers can support the planetary screw rollers 36 definitely at the predetermined positions around the axis 18 of the screw shaft 20, with the planetary screw rollers 36 being rotatable definitely around their respective axes 38, whereby it is definitely prevented that the planetary screw rollers 36 move linearly relative to the roller nut 24, while definitely allowing the planetary screw rollers 36 to revolve relative to the screw shaft 20 and the roller nut 24.

Further, according to the first embodiment shown in the figure, since the friction loss in the rotation of the planetary screw rollers 36 relative to the screw shaft 20 and roller nut 24 by the mating of the threads is smaller than the friction loss in the slipping of the planetary screw rollers 36 relative to the screw shaft 20 or the roller nut 24 without rotating relative thereto, it is definitely ensured that, when the screw shaft 20 and roller nut 24 rotate relative to one another, the planetary screw rollers 36 rotate relative to the screw shaft 20 and the roller nut 24 through the mating of the threads without slipping.

Further, according to the first embodiment shown in the figure, since the screw shaft 20, the planetary screw rollers 36 and the roller nut 24 mate helically with one another, an excellent load bearing performance is ensured as in the device described in the above-mentioned U.S. Patent 3,173,304. Since particularly the inclined flanks of the threads of the screw shaft 20, the planetary screw rollers 36 and the roller nut 24 have an arcuate shape as viewed in the section extending along the axis, so that the threads maintain a substantially point contact with one another at a plurality of positions spaced along a phantom cylinder corresponding to the effective screw diameters regardless of the rotations thereof, it is possible to convert a rotary motion to a linear motion at a high accuracy of correspondence regardless of the direction or the magnitude of rotation.

Further, according to the first embodiment shown in the figure, since the screw shaft 20, the planetary screw rollers 36 and the roller nut 24 have threads 22, 34 and 26 helically extending around the central axis, with each of the threads being symmetrical as viewed in the section extending along the axis 18, it is ensured that the screw shaft 20, the planetary screw rollers 36 and the roller nut 24 cooperate definitely to perform a reduction of movement in the same manner as a planetary gear reduction mechanism, while the screw shaft 20 and the planetary screw rollers 36 cooperate definitely to function as a differential screw.

Further, according to the embodiment shown in the figure, since the foreign material invasion prevention members 56 and 58 are provided, so that the members 56 and 54 are rotatable relative to the screw shaft 20 and the roller nut 24 but not linearly movable relative to the roller nut 24, while the members 56 and 58 have female threads 60 and 62 adapted to engage with the male thread 22 of the screw shaft 20 which is linearly movable relative to the roller nut 24 and the carriers 40 and 42, with the female screw portions rotating relative to the screw shaft 20 therealong while moving linearly relative thereto, an invasion of foreign material to the mating portions among the screw shaft 20, the planetary screw rollers 36 and the roller nut 24 is effectively prevented, whereby a malfunction of the motion conversion device due to an invasion of foreign material is effectively prevented, while it is definitely avoided that the foreign material invasion prevention members 56 and 58 obstruct the rotation of the screw shaft 20, the planetary screw rollers 36 and the roller nut 24.

Further, according to the first embodiment shown in the figure, since the foreign material invasion prevention members 56 and 58 are supported by the carriers 40 and 42, the members 56 and 58 are definitely supported to be rotatable relative to the roller nut 24 but not linearly movable relative thereto, and since the carriers 40 and 42 are made of a low friction material such as an oil-bearing metal, the planetary screw rollers 36 are supported to be smoothly rotatable around their axes 38, ensuring a good durability and silence.

Particularly according to the first embodiment shown in the figure, since the planetary screw rollers 36 do not linearly move when the roller nut 24 is rotated, with the screw shaft 20 only moving linearly, the weight of the member to make a linear displacement can be made smaller as compared with the below-mentioned second through fifth embodiments. This is the same with respect to the below-mentioned fourth embodiment.

Second embodiment

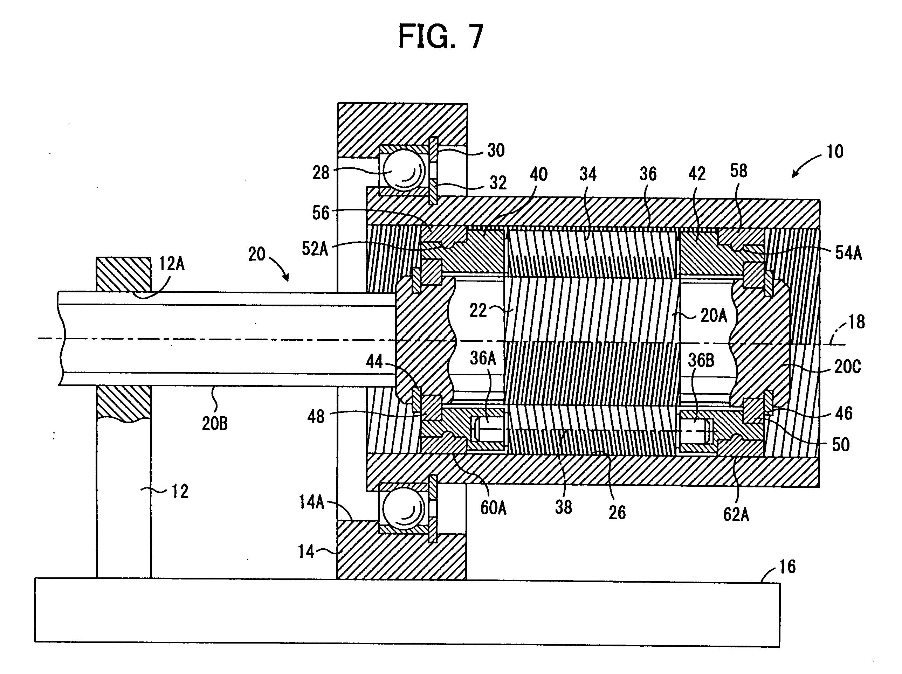

Fig. 7 is a longitudinal sectional view showing a second embodiment of a planetary differential screw type rotary/linear motion conversion device according to the present invention constructed to convert a rotary motion of a roller nut to a linear motion of a screw shaft. In Fig. 7, the members which are the same as those shown in Fig. 1 are designated by the same reference numerals.

In this second embodiment, the screw portion 20A is provided only at a central portion of the larger diameter portion 20C corresponding to the screw portion 20A of the first embodiment opposing the planetary screw rollers 36, with no male thread 22 being formed at opposite end portions of the larger diameter portion 20C. Further, the carriers 40 and 42 are mounted so as not to be movable in the linear directions relative the larger diameter portion 20C by C-rings 44 and 46 and stopper rings 48 and 50 fixed to the larger diameter portion 20C.

Further, the carriers 40 and 42 are formed with circumferencial grooves of a substantially half circular cross section in the outer circumferencial surfaces of sleeve portions thereof, so that the foreign material invasion prevention members 56 and 58 are supported by the carriers 40 and 42 by projections 52A and 54A provided along inner circumferencial surfaces thereof to extend therealong engaging into the circumferencial grooves. The foreign material invasion prevention members 56 and 58 have male threads 60A and 62A along the outer circumferencial surfaces thereof, those male threads engaging with the female thread 26 of the roller nut 24 in an elastically pressed condition.

Further, in this second embodiment, the thread number difference of the roller nut 24 is set to be +1 or -1. This embodiment is the same as the first embodiment except the above-mentioned points. Therefore, the screw shaft 20, the roller nut 24, the planetary screw rollers 36 and the carriers 40 and 42 cooperate to construct a reduction mechanism similar to a planetary gear reduction mechanism, so that the screw shaft 20 and the planetary screw rollers 36 are moved in the linear directions relative to the roller nut 24 according to the thread number difference of the roller nut 24.

As an example, the planetary screw rollers 36 may have the effective screw diameter Dp of 7mm, the male thread 34 thereof being right-handed of four co-extending threads, the roller nut 24 may have the effective screw diameter Dn of 31.5mm which is 4.5 times that of the planetary screw rollers, with a right-handed female thread 26 of 17 co-extending threads which is smaller by 1 than the number of co-extending threads which induces no linear displacement. The screw shaft 20 may have the effective screw diameter Ds of 17.5mm which is 2.5 times that of the planetary screw rollers 36, with a left-handed male thread 22 having 10 co-extending threads which is 2.5 x 4, the condition for inducing no linear displacement.

In this second embodiment, when the roller nut 24 is rotated around the axis 18, the planetary screw rollers 36 revolve around the screw portion 20A of the screw shaft 20 while making a self rotation about the respective axes 38, so that thereby the screw shaft 20 is displaced linearly along the axis 18 together with the planetary screw rollers 36. In this case also, the magnitude Ls of the linear displacement of the screw shaft 20 per one rotation of the roller nut 24 is expressed by the above-mentioned formula 1.

Thus, according to the second embodiment shown in the figure, in the same manner as in the first embodiment, the screw shaft 20, the planetary screw rollers 36 and the roller nut 24 cooperate to function as a reduction device similar to a planetary gear reduction mechanism, wherein the planetary screw rollers 36 and the roller nut 24 cooperate to function as a differential screw device, with the screw shaft 20 being supported not to be rotatable but movable in the linear directions, while the roller nut 24 is supported to be rotatable but not movable in the linear directions. Therefore, a precise conversion of the rotary motion of the roller nut 24 to a corresponding minute linear motion of the screw shaft 20 is obtained, together with the other functions described with respect to the above-mentioned first embodiment.

Particularly according to the second embodiment shown in the figure, the planetary screw rollers 36 may be arranged around the screw shaft 20, and such an assembly of the planetary screw rollers 36 and the screw shaft 20 may be helically inserted into the roller nut 24, whereby the assembly of the motion conversion device 10 is easier as compared with the first embodiment which requires a mounting of the planetary screw rollers 36 at the inside of the roller nut 24. This is the same with respect to the below-mentioned fifth embodiment.

Third embodiment

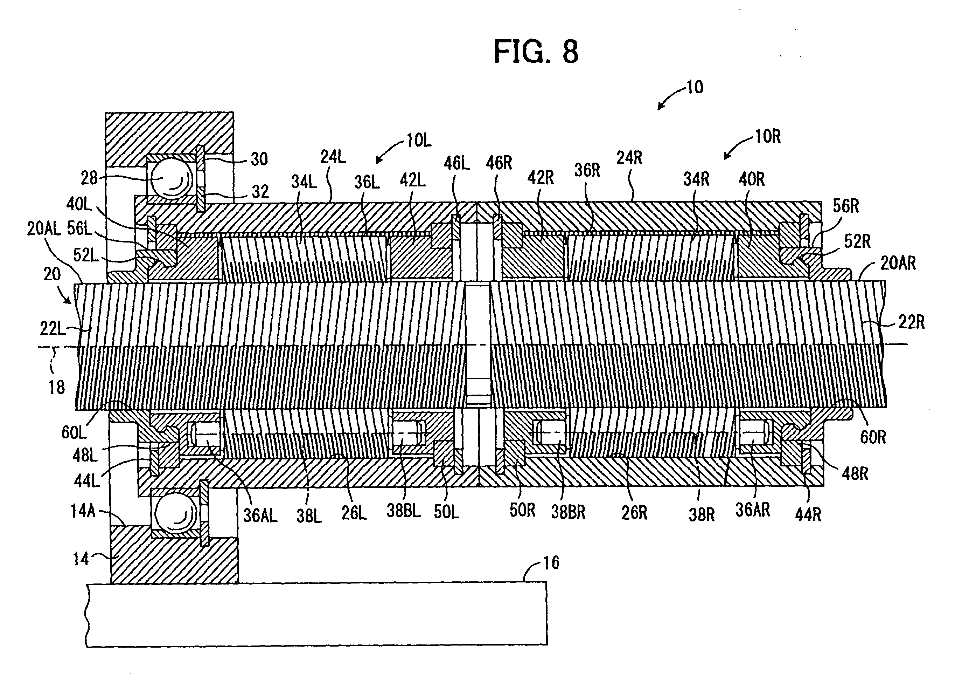

Fig. 8 is a sectional view showing a third embodiment of the planetary differential screw type rotary/linear motion conversion device according to the present invention constructed as a modification of the first embodiment. In Fig. 8, the members corresponding to those shown in Fig. 1 are designated by the same reference numerals as in Fig. 1.

The motion conversion device 10 of this third embodiment has a first motion conversion unit 10L and a second motion conversion unit 10R each having the same construction as the motion conversion device 10 of the above-mentioned first embodiment, the first and the second motion conversion units 10L and 10R being shaped as reflected in the mirror relative to one another along the axis 18. The male thread 22L of the screw shaft 20L, the male thread 34L of the planetary screw roller 36L and the female thread 26L of the roller nut 24L of the first motion conversion unit 10L and the male thread 22R of the screw shaft 20R, the male thread 34R of the planetary screw roller 36R and the female thread 26R of the roller nut 24R of the second motion conversion unit 10R are directed in opposite directions with respect to one another. The screw shaft 20 has a screw portion 20AL formed with a left-handed thread 22L and a screw portion 20AR formed with a right-handed thread 22R, the screw portions 20AL and 20AR being integral, wherein planetary screw rollers 36L, carriers 40L and 42L, a foreign material invasion prevention member 56L, and a roller nut 24L are arranged around the screw portion 20AL. Similarly, planetary screw rollers 36R, carriers 40R and 42R, a foreign material invasion prevention member 56R, and a roller nut 24R are arranged around the screw portion 20AR. The planetary screw rollers 36R and the roller nut 24R are formed with a left-handed male thread 24R and a left-handed female thread 26R, respectively.

The mutually opposing carriers 42L and 42R are spaced apart from one another along the axis 18, whereby the planetary screw rollers 36L and 36R are also spaced from one another along the axis 18. The roller nuts 24L and 24R are connected to be integral at opposing ends thereof contacting together by a mechanical connecting means such as welding or walls, to rotate in unison. The first and the second motion conversion units 10L and 10R are not provided with a foreign material invasion prevention member corresponding to the foreign material invasion prevention member 58 in the above-mentioned first embodiment, while foreign material invasion prevention members 56L and 56R are provided at axial end portions of the planetary screw rollers 36L and 36R of the first and second motion conversion units remote from one another.

Although in the shown embodiment one end of the roller nut 24L of the first motion conversion unit 10L is rotatably supported by the post 12 via the ball bearing 28, the construction may be modified such that the roller nut 24R of the second motion conversion unit 10R is also rotatably supported by a post member via a ball bearing.

The third embodiment is constructed in the same manner as the first embodiment in other respects, so that when the roller nuts 24L and 24R are rotated around the axis 18, the planetary screw rollers 36L revolve around the screw portion 20AL of the screw shaft 20 while rotating around their respective axes 38L, while the planetary screw rollers 36R also revolve around the screw portion 20AR of the screw shaft 20 while rotating around their respective axes 38R, whereby the screw shaft 20 is linearly moved along the axis 18.

Thus, according to the third embodiment shown in the figure, the rotary motion of the roller nut 24 is correctly converted into a minute linear motion of the screw shaft 20 by maintaining a precise correspondence therebetween in the same manner as the above-mentioned first embodiment, providing the same function and effects as obtained by the above-mentioned first embodiment.

Further, in the above-mentioned first embodiment, since the male thread 22 of the screw shaft 20 and the male thread 34 of the planetary screw roller 36 are opposite in the winding direction of the threads, when the mating portions of the screw shaft 20 and the planetary screw rollers 36 slip in the linear direction, the planetary screw roller 36 tends to revolve in the direction opposite to the normal revolving direction, whereby the roller nut 24 is applied with a rotational force opposite to the normal direction of rotation.

In the third embodiment shown in the figure, since the rotational forces applied to the roller nut in the normal direction and the direction opposite to the normal direction of rotation cancel one another between the roller nut 24L of the first rotation conversion unit 10L and the roller nut 24R of the second rotation conversion unit 10R, a slide in the linear direction between the screw shaft 20 and the planetary screw rollers 36 is definitely mechanically prevented.

Fourth embodiment

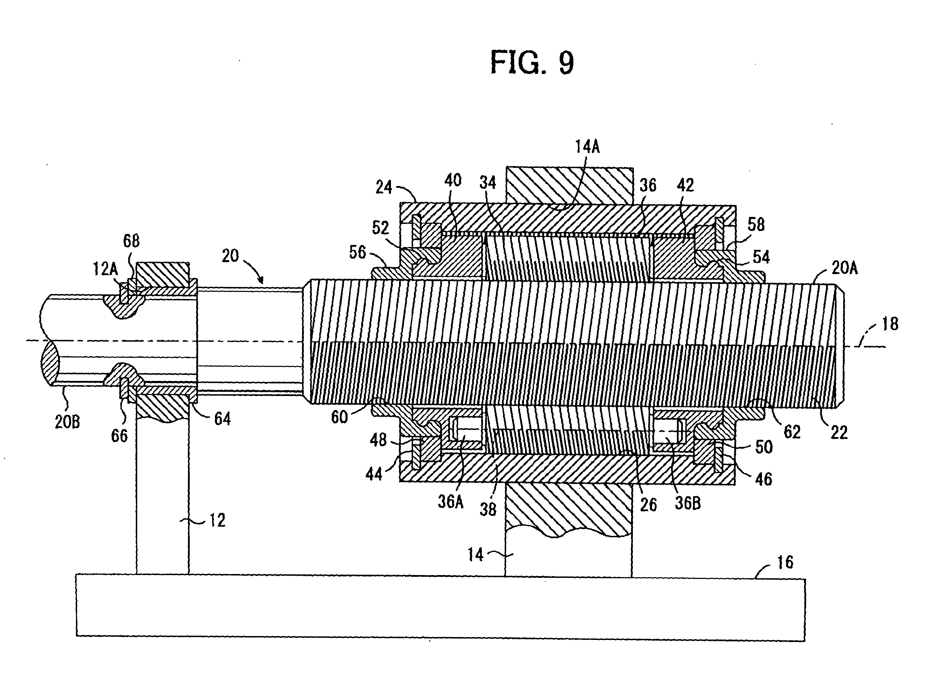

Fig. 9 is a sectional view showing a fourth embodiment of the planetary differential screw type rotary/linear motion conversion device according to the present invention constructed to convert a rotary motion of a screw shaft into a linear motion of a roller nut. In Fig. 9, the members corresponding to those shown in Fig. 1 are designated by the same reference numerals.

In this fourth embodiment, the screw shaft 20 is supported by the post 12 to be rotatable around the axis 18 but not movable in the linear directions, while the roller nut 24 is supported by the post 14 not to be rotatable but movable in the linear directions by celation grooves not shown in detail in Fig. 9.

Particularly in the embodiment not shown in the figure, the shaft portion 20B has a larger diameter portion and a smaller diameter portion, wherein the smaller diameter portion is passed through a through hole 12A of a circular cross section formed in the post 12 via a friction reducing bush 64.

The friction reducing bush 64 has a flange portion disposed between a shoulder portion extending between the larger diameter portion and the smaller diameter portion and the post 12, with a C ring 66 fixed to the smaller diameter portion at the other end of the friction reducing bush 64 to hold a friction reducing washer 68.

This third embodiment has the same construction as the above-mentioned first embodiment in other points, so that when the screw shaft 20 is rotated around the axis 18, the planetary screw rollers 36 revolve around the screw portion 20A of the screw shaft 20 while rotating around their own axes 38, whereby the roller nut 24 is moved in the linear direction along the axis 18 together with the planetary screw rollers 36. In this case, the magnitude of the linear displacement of the roller nut 24 per one rotation of the screw shaft 20 is expressed by the following formula 2.

$$Ln = P \cdot Ds/(Ds + Dn) \qquad \cdots (2)$$

Thus, according to the fourth embodiment shown in the figure, the screw shaft 20, the planetary screw rollers 36 and the roller nut 24 cooperate to function as a reduction device similar to a planetary gear reduction mechanism, wherein the screw shaft 20 and the planetary screw rollers 38 cooperate with one another to function as a differential screw device, while the roller nut 24 is supported not to be rotatable but to be movable in the linear directions, and since the screw shaft 20 is supported to be rotatable but not movable in the linear direction, the rotary motion of the screw shaft 20 is precisely converted into a minute linear motion of the roller nut 24 by maintaining an exact correspondence in the same manner as in the first embodiment, thereby providing the same functions and the effects as described with respect to the above-mentioned first embodiment.

Fifth embodiment

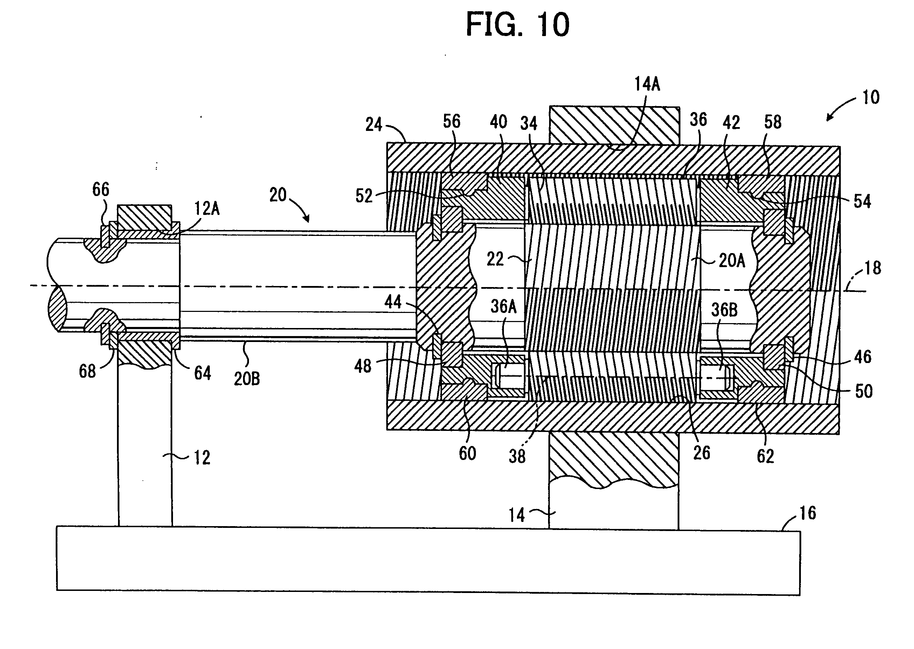

Fig. 10 is a longitudinal sectional view showing a fifth embodiment of the planetary differential screw type rotary/linear motion conversion device according to the present invention constructed to convert a rotary motion of a screw shaft into a linear motion of a roller nut. In Fig. 10, the members corresponding to those shown in Figs. 7 and 9 are designated by the same reference numerals as in Figs. 7 and 9.

In this fifth embodiment, the screw shaft 20 is supported by the post 12 to be rotatable around the axis 18 but not to be movable in the linear directions, while the roller nut 24 is supported by the post 14 to be not rotatable around the axis 18 but linearly movable along the axis 18. This embodiment is constructed in the same manner as the above-mentioned second embodiment with respect to other points.

Therefore, when the screw shaft 20 is rotated around the axis 18, the planetary screw rollers 36 revolve around the screw portion 20A of the screw shaft 20 while rotating around their own axes 38, whereby the roller nut 24 moves in the linear direction along the axis 18. Also in this case, the magnitude Ln of the linear motion of the roller nut 24 per one rotation of the screw shaft 20 is expressed by the above-mentioned formula 2.

Thus, according to the fifth embodiment shown in the figure, the screw shaft 20, the planetary screw rollers 36 and the roller nut 24 cooperate to function as a reductions device similar to a planetary gear reduction mechanism, while the planetary screw rollers 36 and the roller nut 24 cooperate to function as a differential screw device in the same manner as in the above-mentioned first embodiment, while the roller nut 24 is supported to be not rotatable but movable in the linear directions, while the screw shaft 20 is supported to be rotatable but not movable in the linear directions, whereby a rotary motion of the screw shaft 20 is converted into a minute linear motion of the roller nut 24 by maintaining a precise correspondence therebetween in the same manner as in the above-mentioned fourth embodiment, thereby providing the same functions and effects as described with respect to the above-mentioned first embodiment.

Sixth embodiment

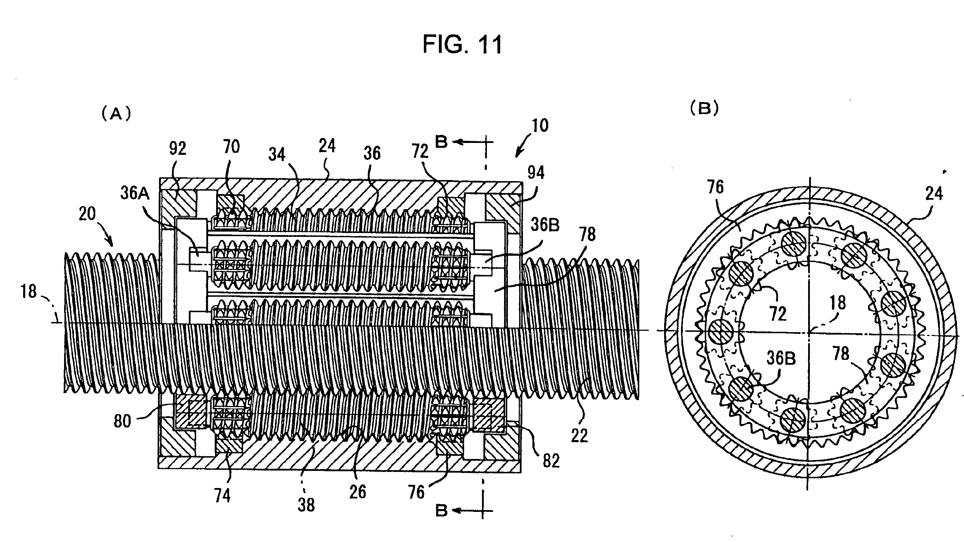

Fig. 11 shows a sixth embodiment of the planetary differential screw type rotary/linear motion conversion device according to the present invention constructed to convert a rotary motion of a screw shaft into a linear motion of a roller nut, wherein Fig. (A) is a sectional view taking along the axis, and Fig. (B) is a sectional view taken by a sectional plane shown by lines B-B in Fig. (A) with the screw shaft being removed. In Fig. 11 (A), the upper half portion is a sectional view showing a section of the roller nut, while in the lower half portion of Fig. 11(A) the roller nut is cut with the planetary screw rollers positioned in the front side of the screw shaft are removed. In Fig. 11, the members corresponding to those shown in Fig. 1 are designated by the same reference numerals as in Fig. 1.

In the motion conversion device 10 of this sixth embodiment, the construction is basically the same as that of the motion conversion device 10 of the first embodiment, except that the winding directions of the respective threads are reversed, wherein, although not shown in Fig. 11, the screw shaft 20 is supported to be not rotatable around the axis 18 but is movable in the linear directions, while the roller nut 24 is supported to be rotatable about the axis 18 but not movable in the linear directions.

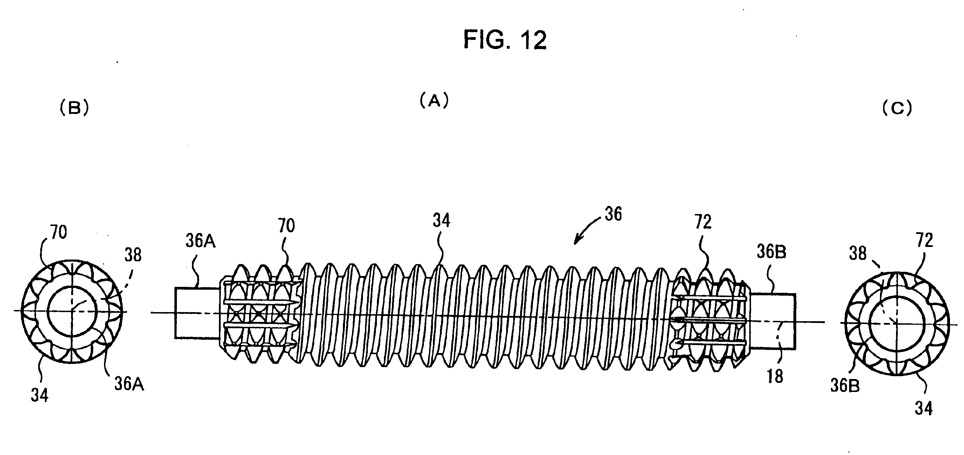

In this sixth embodiment, as shown in detail in Fig. 12, each planetary screw roller 36 has a male thread 34, external gear portions 70 and 72 in the form of spur gear integrally formed in opposite axial end portions thereof, and shaft portions 36A and 36B integrally formed at the opposite axial end portions thereof. The shaft portions 36A and 36B are cylindrical in the shape but different in the diameter from one another for the purpose described in detail hereinunder. In the shown embodiment, the diameter of the shaft portion 36A is smaller than that of the shaft portion 36B. However, this larger/smaller relationship may be reversed.

The external gears 70 and 72 are formed by a gear cutting being applied to the opposite end portions of the male thread portion 34, and therefore, the external configuration of the external gears 70 and 72 extends in the same shape as the male thread 34 and uniformly separated therealong by the gear grooves of a spur gear formed therein. However, the height of the teeth of the external gears 70 and 72 is slightly smaller than the height of the male thread 34, so that the diameter defined by the outer peripheral portions of the teeth of the external gears 70 and 72 is slightly smaller than the diameter defined by the apex of the male thread 34.

The teeth of the external gears 70 and 72 are arranged to show a phase difference therebetween of an angle larger than 0° and smaller than 360° . The external gears 70 and 72 are meshed with internal gears 74 and 76 in the form of a spur gear, the internal gears 74 and 76 also showing the same phase difference therebetween as the external gears 70 and 72. The internal gears 74 and 76 are provided adjacent to opposite axial end of the female thread 26 of the roller nut 24 as pressed in corresponding bores of the roller nut 24. It is desirable that the phase difference of the external and internal gears is determined to be larger than 90° and smaller than 270° so that when the tip portions of the external gears are in contact with the root portions of the internal gears at one axial end portion, the root portions of the external gears are in contact with the tip portions of the internal gears at the other axial portion. In the shown embodiment, the phase difference is 180° .

The axis of the external gears 70 and 72 is in alignment with the axis 38 of the planetary screw roller 36, and the diameter of the base pitch circle of the external gears 70 and 72 is equal to the diameter of the base pitch circle (effective screw diameter) of the male thread 34 of the planetary screw roller 36. Further, the ratio of the number of teeth between the external gears 70 and 72 and the internal gears 74 and 76 is equal to the ratio between the effective screw diameter of the male thread 34 and that of the female thread 26, and therefore the ratio is equal to the ratio of the coextending thread number between the male thread 24 and the female thread 26. In this connection, the external gears 70 and 72 and the internal gears 74 and 76 need not be the spur gears, but may be helical gears of a spiral angle of, for example, 30° , for the convenience of assembling.

The planetary screw rollers 36 are each supported by a carrier 78 to be rotatable around the respective axes 38. The carrier 78 has a support ring 80 serving as a first support portion for supporting the shaft portions 36A of the planetary screw rollers 36 to be rotatable around the axes 38, a support ring 82 serving as a second support portion for supporting the shaft portions 36B of the planetary screw rollers 36 to be rotatable around the axes 38, and a plurality of connecting portions 84 for integrally connecting the support rings 80 and 82 with one another.

The support rings 80 and 82 have an inner diameter slightly larger than the outer diameter of the male thread 22 of the screw shaft 20, and an outer diameter slightly smaller than the inner diameter of the female thread 26 of the roller nut 24. The support rings 80 and 82 have a plurality of openings 86 and 88 for receiving the shaft portions 36A and 36B of the planetary screw rollers 36, respectively. Corresponding to the relationship between the diameters of the shaft portions 36A and 36B, the diameter of the openings 86 is made to be smaller than the diameter of the openings 88. The openings 86 and 88 are disposed as uniformly spaced around the axis 90 of the carrier 78, to have a U-shaped cross section open toward outside of the diameter. The connecting portions 84 are in the form of plates to extend radially around the axis 90 as spaced therearound. The carrier 78 may be formed by any material having a required shape maintaining performance and a required strength such as a metal, but may be preferably made of a resin as it has such a construction described above.

At the inside of the roller nut 24 and axially outside of the support rings 80 and 82, there are provided stopper rings 92 and 94 to have an outer diameter larger than that of the support rings 80 and 82, the stopper rings 92 and 94 being fixed as pressed in corresponding bores formed in the roller nut 24. The stopper rings 92 and 94 have a cross section of L extending to the axially outside of the support rings 80 and 82, so as thereby to prevent the carrier 78 to move axially outside relative to the roller nut 24.

As shown in Fig. 11, in this sixth embodiment, no such foreign material invasion prevention members as the members 56 and 58 in the preceding embodiments is provided, while the support rings 80 and 82 of the carrier 78 function as a foreign material invasion prevention member. However, foreign material invasion prevention members similar to those in the preceding embodiments may be provided in order to more definitely prevent an invasion of foreign material into the mating portions of the respective screws.

Next, the thread convex configurations (tooth shapes) of the female thread 28 of the roller nut 24, the male thread 34 of the planetary screw roller 36 and the male thread 22 of the screw shaft 20 of the sixth embodiment will be explained. The respective threads of the rotary/linear motion conversion device 10 of the present invention must function as a thread and also as a gear tooth. In order for the respective threads to function as the screws, they must mate properly with one another at the position of the effective screw diameter. Further, in order for the respective threads to function as the gear, the module of the respective threads (gear) must be the same, with the same pressure angles as the others. However, in the rotary/linear motion conversion device 10 of the present invention, the module and the pressure angle of the mutually meshing screw shaft 20 and the planetary screw rollers 36 can not be the same as the other, and therefore, the teeth (threads) are liable to interfere with one another, and the device would not be easily assembled.

Generally, in order for two screws to mate with one another, it is required that the threads of the two screws have a common pitch and a common helical angle. However, in the rotary/linear motion conversion device 10 of the present invention, since the number of co-extending threads is increased or decreased from the relationship of the ratio between the effective screw diameter and the number of co-extending threads, when the angle of the thread projection is made common, the pressure angle which is the angle of mating along the circumferencial direction becomes different between the screw shaft and the planetary screw roller.

Expressing the thread angle (pressure angle seen in a section along the axis) by $\lambda$, the lead angle and the lead by $\gamma$ and L, respectively, the pitch and the number of co-extending threads of the screw by P and N, respectively, and the effective screw diameter (base pitch circle diameter) by $\phi$, the lead L, lead angle $\gamma$, spiral angle $\beta$ of the screw, pressure angle $\alpha$ of meshing are related with one another according to the following formulae 3-6

$$L = P \cdot N \qquad\qquad \cdots\cdots(3)$$

$$\gamma = \mathrm{Tan}^{-1}\left\{\, P\,/(\phi \cdot \pi)\right\} \qquad\qquad \cdots\cdots(4)$$

$$\beta = 0.5\pi - \gamma \qquad\qquad \cdots\cdots(5)$$

$$\alpha = \mathrm{Tan}^{-1}\left\{\,\mathrm{Tan}(\lambda)\cdot\mathrm{Tan}(\beta)\,\right\} \qquad\qquad \cdots\cdots(6)$$

Therefore, when the pitch P, the number of co-extending thread N and the effective screw diameter $\phi$ are determined, the pressure angle a can be obtained by calculation. When it is assumed that the pitch Pp of the planetary screw roller 36 is 1mm, the co-extending thread number Np is 1, the effective screw diameter $\phi$p is 4mm, the ratio between the effective screw diameters of the screw shaft 20 and the planetary screw roller 36 is 3:1, and the thread difference number of the screw shaft 20 is +1, the lead L of the screw shaft 20 should be 4mm, and the effective screw diameter $\phi$s should be 12mm.

Therefore, when the helical angle $\beta$p of the planetary screw roller 36 is 85.45°, the helical angle $\beta$s of the screw shaft 20 is 83.94°, and the thread flank angle $\lambda$p of the planetary screw roller 36 is 27.5°, the pressure angle $\alpha$p of the planetary screw roller 36 in case of a normal gear should be 81.31°. The thread flank angle $\lambda$s of the screw shaft 20 which satisfies the above-mentioned pressure angle is 34.76°, not the same as that of the planetary screw roller 36, causing a difference of 7.26° in the thread flank angle, obstructing a mating of the screws by an interference therebetween.

Therefore, some special measure is required so as to prevent the interference between the threads by overcoming the problem of difference in the module and the pressure angle between the screw shaft 20 and the planetary screw rollers 36 and to eliminate the backlash. As described above, the differences in the module and the pressure angle are caused by the increase or decrease of the number of co-extending threads of the screw shaft 20 from the relationship between the ratio of the effective screw diameters and the number of co-extending threads. Therefore, in order to mate the screws of different lead angles properly, it is important how the shapes of the thread projections are determined.

Since the screws of the rotary/linear motion conversion device 10 of the present invention operates also as a gear device, by viewing the screws as the gears, the threads of the planetary screw rollers 36 and the screw shaft 20 mate with one another at the position of the base pitch circle, with the tip portions of the thread of the planetary screw rollers mating with the root portions of the thread of the screw shaft, while the root portions of the thread of the planetary screw rollers mate with the tip portions of the thread of the screw shaft, according to the rotation of the planetary screw rollers 36 and the screw shaft 20. Therefore, it is considered that the thread tooth shapes of the screws are designed such that a tight contact occurs in such a meshing.

First, an imaginary flank angle of thread is determined to be a mean value of the flank angles of the threads of planetary screw roller 36 and the screw shaft 20, and the imaginary angle of thread is converted into a pressure angle, the value of which is a mean value of the pressure angles in the mating of the two screws. From such a pressure angle, the flank angles of the respective threads are calculated in reverse according to the difference in the lead angles.

The flow of the calculations is as follows:

First, a mean helical angle $\beta a$ is obtained from the helical conditions of the planetary screw roller 36 and the screw shaft 20, then a mean flank angle $\lambda a$ is determined, and then a mean pressure angle $\alpha a$ is calculated according to the above-mentioned formula 6. Then, based upon the mean pressure angle $\alpha a$ and the respective helical angles $\beta p$ and $\beta s$, the flank angle $\lambda p$ of the planetary screw roller 36 and the flank angle $\lambda s$ of the screw shaft 20 are calculated according to the above-mentioned formula 6.

When the above-mentioned conditions of the screws are assumed, the mean helical angle $\beta a$ is calculated as follows according to the screw conditions.

$$\beta a = (\beta p + \beta s)/2$$
$$= (85.31 + 83.94)/2$$
$$= 84.70$$

Then, determining the mean flank angle $\lambda a$ as 27.5°, the mean pressure angle $\alpha a$ should be 79.89°. The flank angle $\lambda p$ of the planetary screw roller 36 which satisfies the above-mentioned pressure angle is 30.75°, while the flank angle $\lambda s$ of the screw shaft 20 which satisfies the above-mentioned pressure angle is 24.05°. In this connection, the relationship between the flank angles $\lambda s$ and $\lambda p$ is such as $\lambda s < \lambda p$ when the thread number difference of the screw shaft 20 is positive, and $\lambda s > \lambda p$ when the thread number difference of the screw shaft 20 is negative. Therefore, when the thread number difference of the screw shaft 20 is -1, the thread flank angle $\lambda p$ of the planetary screw roller 36 is 24.05°, and the thread flank angle $\lambda s$ of the screw shaft 20 is 30.75°.

When the thread flank angles were thus calculated, the thread shapes of the respective screws are obtained based upon the thread flank angles. The method of determining the thread shapes is explained hereinunder.

The device 10 of the present invention is a rotary/linear motion conversion device in which the screw shaft 20 or the roller nut 24 is moved in the linear directions relative to the other. In order to support a large load in the linear direction with no backlash, it is required that the threads of the screw shaft 20, the planetary screw rolles 36 and the roller nut 24 have each as a smaller flank angle as possible when viewed in a section extending along the axis 18, with a high strength of the threads, while the threads mate with one another at the position of the effective screw diameter, tightly engaging with one another with no clearance.

The difference in the meshing of the device of the present invention from the conventional helical gears is in that the threads of the device of the present invention need to contact with one another with no clearance not only in the direction perpendicular to the axis but also in the direction of linear displacement, as compared with the conventional helical gears in which the teeth may mesh with one another with no clearance only in the section perpendicular to the axis. Therefore, in the device of the present invention, the threads must tightly mate with one another not only in the section perpendicular to the axis but also in the section including the axis.

In the conventional slide screws or ball screws, the contact portions of the screws or the like are in a helical shape centered along the axis, and therefore, in order to make the backward efficiency definitely be 0, it is important that the contact potions of the threads of the screw shaft 20 and the planetary screw rollers 36 are helical around the axis 18. In the device of the present invention, the threads mate with one another with no clearance as seen in the section including the axis 18 such that the contact portions of the threads are radial around the axis 18, so that a transmission of a large force in the linear direction is available.

In determining the shapes of the threads, it is not allowed to make the root angle of the thread of the roller nut 24 be smaller than 45° from the view point of the interference therebetween and the workability of the female thread 26 of the roller nut 24. Generally, unless the root angle of thread needs to be larger than 55°, i.e., the thread flank angle $\lambda n$ is larger than 27.5°, the thread of the roller nut 24 can not be continuously worked or formed to have a shape of thread bordered by substantially straight lines as viewed in the section including the axis,.

Further, the method of determining the thread shape differs according to whether the thread number difference of the screw shaft 20 is positive or negative.

(1) When the thread number difference of the screw shaft is positive:

First, the flank angle of the thread of the roller nut 24 is determined. The thread flank angle $\lambda n$ of the roller nut 24 is 1/2 of the thread groove angle thereof.

Now, assuming the thread groove angle of the roller nut 24 to be 55°, the thread flank angle $\lambda n$ is 27.5°. When the modules of the screw shaft 20 and the planetary screw roller 36 are different from one another with the thread number difference of the screw shaft 20 being positive, an interference between the threads due to the difference occurs as concentrated at the thread root portion of the planetary screw roller 36 and the thread tip portion of the screw shaft 20. In order to calculate a mean pressure angle of the threads of the planetary screw roller 36 and the screw shaft 20, it is assumed that the flank angle (mean pressure angle $\lambda a$ in a section including the axis) is 27.5°. In this case, the flank angle $\lambda pi$ at the root portion of the thread of the planetary screw roller 36 is 24.05°, and the flank angle $\lambda so$ at the tip portion of the thread of the screw shaft 20 is 30.75°.

Therefore, when the thread of the planetary screw roller 36 has the flank angle $\lambda po$ of 27.5° at the tip portion, and the flank angle $\lambda pi$ of 24.05° at the root portion, the thread of the planetary screw roller 36 tightly contacts with the thread of the roller nut 24 when viewed in a section including the axis 18.

Further, when the thread of the screw shaft 20 has the flank angle $\lambda so$ of 30.75° at the tip portion, and the flank angle $\lambda si$ of 27.5° at the root portion, the thread of the screw shaft 20 and the planetary screw roller 36 mate tightly in both of the linear and rotational directions.

The thread root portion of the planetary screw roller 36 and the thread tip portion of the screw shaft 20 must have a common pressure angle as viewed in a section perpendicular to the axis 18 which is the direction of transmission of the rotary force. Further, the screw shaft 20 and the planetary screw roller 36 must continuously mate with one another in radially inside and outside regions of the position of the effective screw diameter. Therefore, the mean pressure angle in the section including the axis 18 must be 27.5° which is equal to the thread flank angle $\lambda n$ of the roller nut 24, the thread flank angle $\lambda po$ at the tip portion of the planetary screw roller 36 and the flank angle $\lambda si$ at the root portion of the screw shaft 20.

As will be understood from the above analysis, the thread shapes of the respective screws are most ideal when the thread flank angle of the roller nut 24 is as a smaller acute angle as possible within a range allowed under the restriction of working, the thread flank angle at the tip portion of the planetary screw roller 36 and the thread flank angle at the root portion of the thread screw 20 are the same as the thread flank angle of the roller nut 24, and the mean value of the thread flank angle at the root portion of the planetary screw roller 36 and the thread flank angle at the tip portion of the screw shaft 20 is the same as the thread flank angle of the roller nut 24.

Therefore, the desirable thread flank angles of the respective screws in the above-mentioned example are as follows:

Thread flank angle $\lambda n$ of roller nut 24
= thread flank angle $\lambda po$ at tip portion of planetary screw roller 36
= thread flank angle $\lambda si$ at root portion of screw shaft 20
= 27.5°
Thread flank angle $\lambda pi$ at root portion of planetary screw roller 36
= 24.05°
Thread flank angle $\lambda so$ at tip portion of screw shaft 20
= 30.75°

The thread shapes of the respective screws are modified by an involute function so as not to interfere in rotation.

(2) When the thread number difference of the screw shaft is negative:

Also in this case the thread flank angle $\lambda$n of the roller nut 24 is restricted by the angle of the thread groove. Further, when the modules are different in the screw shaft 20 and the planetary screw roller 36 with the thread number difference of the screw shaft 20 being negative, the interference due to the difference occurs as concentrated at the thread tip portion of the planetary screw roller 36 and the thread root portion of the screw shaft 20.

Therefore, as in the case of the thread number difference of the screw shaft 20 being positive, assuming the thread groove angle of the roller nut 24 being 55°, the thread flank angle $\lambda$n is 27.5°. Thus the thread flank angle $\lambda$po at the tip portion of the planetary screw roller 36 is also 27.5°, and since it must tightly mate at the root portion when viewed in the section including the axis 18, the thread flank angle $\lambda$pi at the root portion of the planetary screw roller 36 should be 27.5°. Further, since the thread tip portion of the screw shaft 20 mates with the thread root portion of the planetary screw roller 36, the thread flank angle $\lambda$so at the thread tip portion of the screw shaft 20 should also be 27.5°.

Since the thread flank angle $\lambda$si at the thread root portion of the screw shaft 20 only is affected by the difference in the module, it needs to be calculated according to the above-mentioned formula 6, such as to be 19.14°.

As will be understood from the foregoing, it is the most ideal tooth shapes of the respective screws that the thread flank angle of the roller nut 24 is as a smaller acute angle as possible within a range allowed under the restrictions of working, the thread flank angles at the thread tip portion and the thread root portion of the planetary screw roller 36 and the thread flank angle at the thread tip portion of the screw shaft 20 are the same as the thread flank angle of the roller nut 24, and the thread flank angle at the thread root portion of the screw shaft 20 is the smaller of the two thread flank angles calculated based upon the mean pressure angle and the helical angle.

Also in the case that the thread number difference of the screw shaft is negative, the thread shapes of the respective screws are modified by an involute function so as not to interfere in rotation.

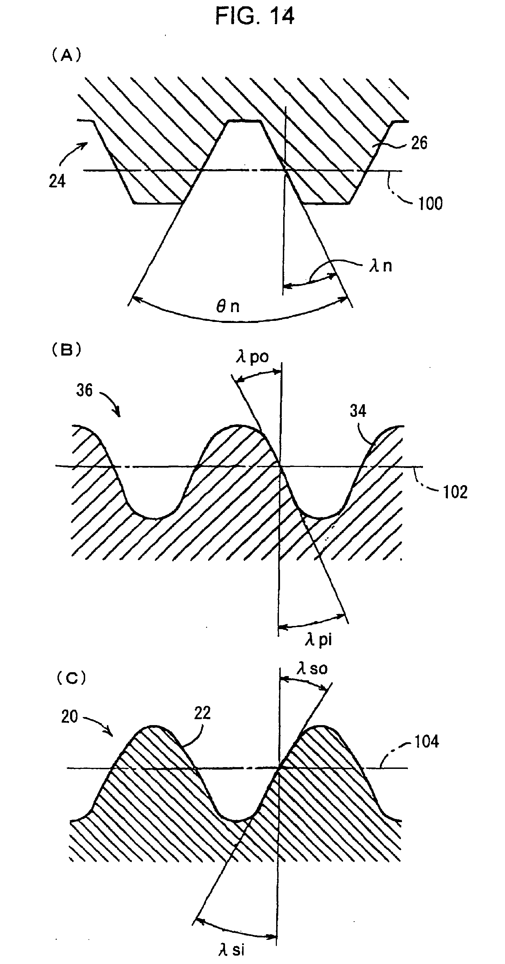

Fig. 14 shows enlarged partial sectional views along the axes of the respective screws, wherein (A) shows the female thread 26 of the roller nut 24, (B) shows the male thread 34 of the planetary screw roller 36, and (C) shows the male thread 22 of the screw shaft 20. In Fig. 14, 100, 102 and 104 are the base pitch circles of the female thread 26, the male thread 34 and the male thread 22, regarding them as gear wheels.

As shown in Fig. 14, the female thread 26 of the roller nut 24 has a thread shape of a trapezoid, and the male thread 34 of the planetary screw roller 36 and the male thread 22 of the screw shaft 20 have thread shapes of an involute. The female thread 26 of the roller nut 24 has a groove open angle θn equal to2 x $\lambda$n, and the male thread 34 of the planetary screw roller 36 has a thread flank angle $\lambda$po at the thread tip portion and a thread flank angle $\lambda$pi at the thread root portion which is smaller than that at the thread tip portion. The male thread 22 of the screw shaft 20 has a thread flank angle $\lambda$so at the thread tip portion and a thread flank angle $\lambda$si at the thread root portion which is smaller than that at the thread tip portion.

Since the thread number difference of the screw shaft 20 is +1, that is, the number of co-extending threads of the screw shaft 20 is larger by 1 than the number of co-extending threads thereof which satisfies the relationship with regard to the effective screw diameters and the number of the co-extending threads of the screw shaft 20, the planetary screw roller 36 and the roller nut 24 for generating no linear displacement therebetween when the roller nut 24 or the screw shaft 20 is rotated, the thread flank angle $\lambda$po at the thread tip portion of the male thread 34 of the planetary screw roller 36 is set to be the same as the thread flank angle $\lambda$n of the female thread 26 of the roller nut 24, and the thread flank angle $\lambda$si at the thread root portion of the male thread 22 of the screw shaft 20 is set to be the same as $\lambda$n, as shown in Fig. 14.

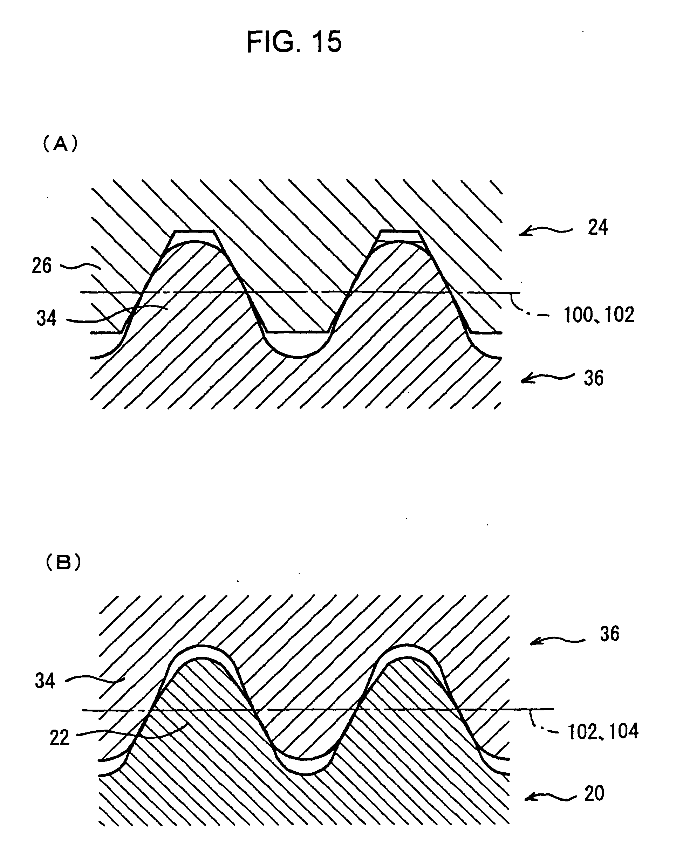

Fig. 15 shows the mating conditions of the respective screws in the above-mentioned sixth embodiment of the thread number difference of the screw shaft 20 being +1, wherein Fig. (A) shows the mating condition between the female thread 26 of the roller nut 24 and the male thread 34 of the planetary screw roller 36, and Fig. (B) shows the mating condition between the male thread 34 of the planetary screw roller 36 and the male thread 22 of the screw shaft 20. As will be understood from Fig. 15, the planetary screw roller 36 is in a good mating condition with the screw shaft 20 and the roller nut 24.

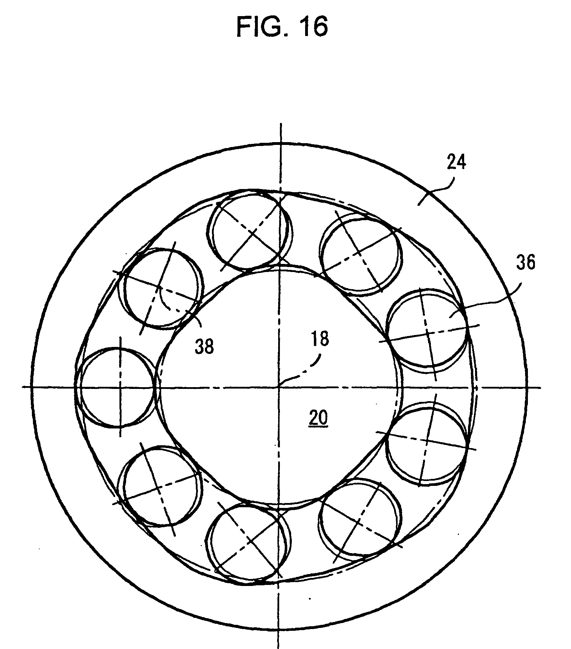

Fig. 16 is an enlarged sectional view showing a section perpendicular to the axis 18 of a longitudinally central portion of the motion conversion device 10 according to the above-mentioned sixth embodiment. In Fig. 16, the circles by the thinner lines show the effective screw diameters of the respective screws, and the thicker lines show the tooth shapes of the respective screws. In Fig 16, a hatching to show the section is omitted for the clarity of illustration. As will be understood from Fig. 16, in the section perpendicular to the axis 18 the planetary screw rollers 36 are maintaining the tooth meshing with the screw shaft 20 and the roller nut 24, so as to transmit a rotational force therebetween by the gear meshing.

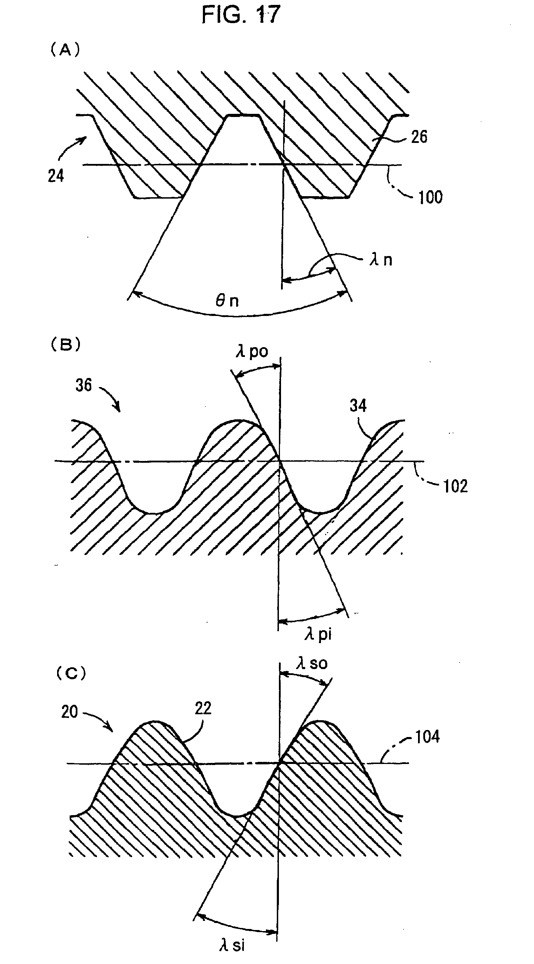

When the thread number difference of the screw shaft 20 is -1, that is, the number of co-extending threads of the screw shaft 20 is smaller by 1 than that which satisfies the condition of the relationship with regard to the effective screw diameters and the numbers of co-extending threads of the screw shaft 20, the planetary screw roller 36 and the roller nut 24, as shown in Fig. 17, the thread flank angle $\lambda$n of the female thread 26 of the roller nut 24, the thread flank angle λpi at the thread root portion of the male thread 34 of the planetary screw roller 36, and the thread flank angle λso at the thread tip portion of the male thread 22 of the screw shaft 20 are set to be the same as each other. The thread flank angle λsi at the thread root portion of the male thread 22 of the screw shaft 20 is set to be a smaller of the two thread flank angles calculated based upon the mean pressure angle and the helical angle.

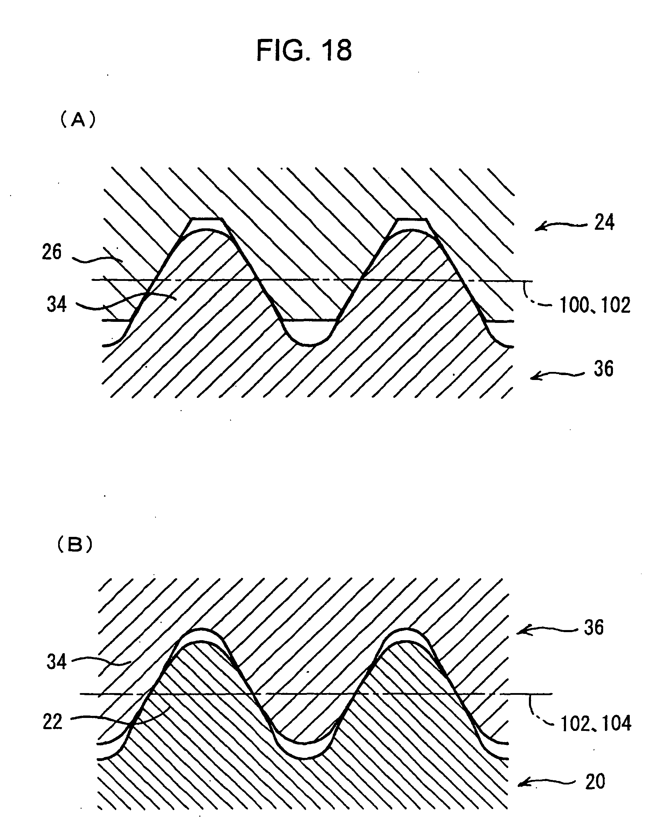

Fig. 18 shows the mating conditions of the respective screws having the thread shapes as described above in the case that the thread number difference of the screw shaft 20 is -1, wherein Fig.(A) shows the mating condition between the female thread 26 of the roller nut 24 and the male thread 34 of the planetary screw roller 36, and Fig. (B) shows the mating condition between the male thread 34 of the planetary screw roller 36 and the male thread 22 of the screw shaft 20.

As will be understood from Fig. 18, also in the case of the thread number difference of the screw shaft 20 being -1, the planetary screw roller 36 is in a good mating condition with the screw shaft 20 and the roller nut 24 when viewed in the section including the axis 18. Further, though not shown in the figure, in the cross section perpendicular to the axis 18 the planetary screw rollers 36 maintain a gear meshing condition with the screw shaft 20 and the roller nut 24 in the same manner as shown in Fig. 16, so that the planetary screw rollers 36, the screw shaft 20 and the roller nut 24 transmit a rotational force therebetween by a gear meshing.

Thus, according to the sixth embodiment shown in the figure, in the same manner as the above-mentioned first embodiment, the screw shaft 20, the planetary screw rollers 36 and the roller nut 24 cooperate to function as a reduction device similar to a planetary gear reduction mechanism, wherein the planetary screw rollers 36 and the roller nut 24 cooperate to function as a differential screw device, with the screw shaft 20 being supported to be not rotatable but movable in the linear directions, while the roller nut 24 is supported to be rotatable but not movable in the linear direction. Therefore, a rotary motion of the roller nut 24 is precisely converted into a minute linear motion of the screw shaft 20 in the same manner as described with respect to the above-mentioned first embodiment.

As described above, although the motion conversion devices 10 according to the above-mentioned first through fifth embodiments operate satisfactorily, when a foreign material such as dust sticks to the screw shaft 20, a smooth movement between the screw shaft 20 and the planetary screw rollers 36 will be lost, thereby generating a slippage between the roller nut 24 and the planetary screw rollers 36, thereby causing that the roller nut 24 only is shifted relative to the screw shaft 20 and the planetary screw rollers 36 along the axis 18. This problem will become more serious when a lubricant is supplied between the roller nut 24 and the planetary screw rollers 36. It will also happen that the screw shaft 20 slides relative to the planetary screw rollers 36 without depending upon the differential principle, thereby causing a slip displacement between the planetary screw rollers 36 and the screw shaft 20.

In this regard, according to the sixth embodiment, the planetary screw rollers 36 have the external gears 70 and 72 formed integrally with the opposite axial ends of the male threads 34, the external gears meshing with the internal gears 74 and 76 fixed to the opposite axial end portions adjacent to the female thread 26 of the roller nut 24, so that the rotation of the roller nut 24 and the planetary screw rollers 36 are definitely transmitted therebetween by the meshing of the external and internal gears, and therefore it is definitely prevented that the roller nut 24 only moves relative to the screw shaft 20 and the planetary screw rollers 36 along the axis 18 due to a sliding between the roller nut 24 and the planetary screw rollers 36.

Further, when the roller nut 24 is rotated around the axis 18, the planetary screw rollers 36 are definitely rotated thereby, so that the planetary screw rollers 36 definitely rotate around their axes 38 while revolving around the screw shaft 20, and therefore the screw shaft 20 is moved definitely in the axial direction along the axis 18 based upon the differential principle with no sliding.

Particularly according to the sixth embodiment, the axis of the external gears 70 and 72 is in alignment with the axis 38 of the planetary screw roller 36, with the base pitch diameter of the external gears 70 and 72 being equal to the diameter of the pitch circle of the male thread 34 of the planetary screw roller 36. The tooth ratio between the external gears 70 and 72 and the internal gears 74 and 76 is equal to the ratio between the effective screw diameters of the male thread 34 and the female thread 26, so that it is equal to the ratio of the co-extending threads between the male thread 34 and the female thread 26.

Therefore, the relationship between the rotations of the roller nut 24 and the planetary screw rollers 36 is strictly controlled by the tooth ratio between the external gears 70 and 72 and the internal gears 74 and 76, and can be strictly in coincidence with the relationship of the effective screw diameters between the male thread 34 and the female thread 26. Therefore, even when there occurs a change in the relationship of the effective screw diameters due to a manufacturing allowance or a time lapse between the male thread 34 and the female thread 26, the relationship of the rotation between the roller nut 24 and the planetary screw rollers 36 according to the differential principle is definitely maintained, so that the accuracy of operation is more definitely ensured in this embodiment than in the devices according to the first through fifth embodiment.

As described above, in U.S. Patent 2,683,379 a planetary gear is provided in addition to the thread mating. However, the object of the external gears 70 and 72 and the internal gears 74 and 76 in the sixth embodiment is different from that of the planetary gear in said U.S. patent, also operating differently as compared with the U.S. patent. In the bearing device described in U.S. Patent 2,683,379, all screws are helical in the same direction. Therefore, the interaction between the roller nut and the screw shaft tends to incline the planetary screw roller in the same direction perpendicular to the lead angle. Therefore, unless the opposite ends of the planetary screw rollers are supported not to incline, the planetary screw rollers would incline, resulting in the locking of the screws to stop the rotation. Therefore in the bearing device of this U.S. patent, the planetary gear is indispensable for the roller nut and the planetary screw rollers to operate without locking.

In contrast, in the construction of the sixth embodiment, the male thread 22 of the screw shaft 20 and the male thread 34 of the planetary screw rollers 36 are helical in opposite directions, these threads forming a helical gear construction. Therefore, the external gears 70 and 72 and the internal gears 74 and 76 are not required for the basic operation of the motion conversion device 10 for transmitting a rotation. Therefore, in the construction of the sixth embodiment, the external gears 70 and 72 and the internal gears 74 and 76 are to form a most convenient auxiliary means for ensuring the basic operation based upon the differential principle of the motion conversion device while definitely excluding such an operation that is not based upon the differential principle due to the above-mentioned slippage.

Further, in the construction of the sixth embodiment, the external gears 70 and 72 and the internal gears 74 and 76 can stipulate the operation of the screw shaft 20 as described above. In the construction of the sixth embodiment, the external and internal gears can exclude a slippage between the screw shaft 20 and the planetary screw rollers 36. In the bearing device of the above-mentioned U.S. patent, the gears stipulate only the function between the planetary screw roller 36 and the roller nut 24.

Thus, in the construction of the sixth embodiment, although it might appear that the same gear construction is added as in the above-mentioned U.S. patent, the function and the effect of the gear construction is quite different because of the difference of the construction of the motion conversion device 10.

Further, even when all of the planetary screw rollers 36 are formed to be identical, it can happen that the relation of the phase of the external gear 70 relative to that of the male thread 34 at one end of the planetary screw rollers 36 is different from the relation of the phase of the external gear 72 relative to that of the male thread 34 at the other end of the planetary screw roller 36, and therefore it must be cared that all of the planetary screw rollers 36 are mounted to the roller nut 26 such that the planetary screw rollers 36 are all definitely oriented in the same direction relative to the roller nut 24.

According to the sixth embodiment, since the diameter of the shaft portion 36A at one end of the planetary screw roller 36 is made smaller than that of the shaft portion 36B at the other end thereof, with the diameter of the opening 86 in the support ring 80 of the carrier 78 being correspondingly smaller than that of the opening 88 in the support ring 82, all of the planetary screw rollers 36 are readily oriented in the same direction with respect to the roller nut 24, ensuring that all of the planetary screw rollers 36 are correctly assembled into the roller nut 24, thereby ensuring the correct meshing between the external gears 70 and 72 and the internal gears 74 and 76.

For a smooth transmission of rotation by the meshing between the external gears 70 and 72 and the internal gears 74 and 76 it is desirable that these gears have as many teeth as possible. However, an increase of the teeth number restricts to reduce the diameter of the planetary screw roller 36, also decreasing the teeth strength and also making the roll manufacturing and the working of the gear more difficult.

According to the sixth embodiment, the external gears 70 and 72 of the planetary screw roller 36 are formed to have a phase difference larger than 0° and smaller than 360° relative to one another, and the internal gears 74 and 76 are formed to have the same phase difference as the phase difference of the external gears 70 and 72 relative to one another. Therefore, the same effect is obtained as in the case of doubling the number of teeth without reducing the size of the teeth, thereby preventing that the size of the motion conversion device 10 becomes larger due to a larger diameter of the planetary screw roller 36, while making it possible to form the male thread 34 of the planetary gear roller 36 and the external gears 70 and 72 by a less expensive roll forming, instead of cutting, in the same manner as the forming of the male thread 22 of the screw shaft 20 and the female thread 26 of the roller nut 24.

Further, according to the sixth embodiment, the external gears 70 and 72 are formed by forming the tooth shape of a spur gear in the opposite axial end portions of the male thread 34, so that thereby the thread convex of the male thread 34 is separated into the spur gear teeth spaced uniformly around the axis 38 as separated by the tooth groove of the spur gear. Therefore, as compared with such a construction that the external gears 70 and 72 are formed as a member separate from the body of the planetary screw roller 36 and fixed thereto, the planetary screw roller 36 having the external gears is manufactured easily at a low cost. The external gears 70 and 72 function as a part of the male thread 34 when the planetary screw roller 36 is assembled into the roller nut 24 as described hereinbelow.

The motion conversion device 10 of the sixth embodiment having the above-mentioned construction is assembled in the following manner.

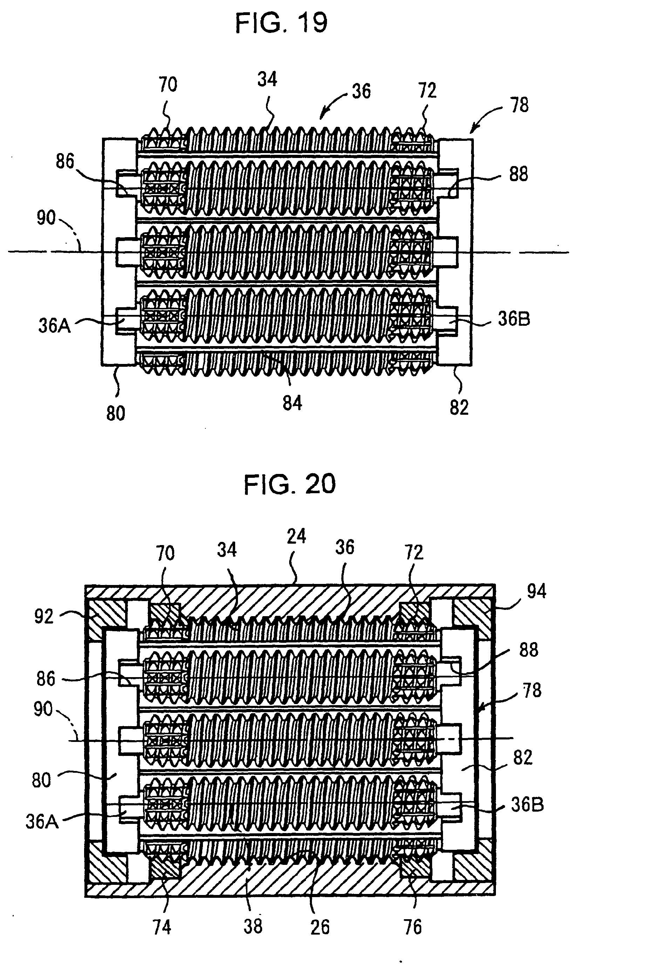

As shown in Fig. 19, nine pieces of the planetary screw rollers 36 are assembled into the carrier 78 so as to be supported thereby with the shaft portions 36A and 36B of the respective planetary screw rollers 36 being engaged into the openings 86 and 88, respectively, of the carrier 78. Then, the nine planetary screw rollers in the condition assembled into the carrier 78 are inserted into the roller nut 24 while the carrier 78 is rotated around the axis 90, whereby the male threads 34 of the respective planetary screw rollers 36 mate with the female thread 26 of the roller nut 24, while rotating around their own axes 38 and revolving around the axis of the roller nut 24 as the carrier 78 is gradually inserted into the roller nut 24.

When the planetary screw rollers 36 have been inserted into the roller nut 24 to the predetermined position shown in Fig. 20, the internal gears 74 and 76 are pressed into the roller nut 24 so as to mesh with the spur gears 70 and 72. Then the stopper rings 92 and 93 are inserted into the roller nut 24 by pressing.

Then, the screw shaft 20 is inserted through either the stopper ring 92 and the support ring 80 or the stopper ring 94 and the support ring 82 so that the male thread 22 of the screw shaft 20 mates with the male threads 34 of the planetary screw rollers 36 with a rotation of the screw shaft 20 around the axis 18 until the screw shaft 20 reaches a predetermined position relative to the roller nut 24 and the planetary screw rollers 36.

Thus, according to this method of assembly of the sixth embodiment, the motion conversion device 10 is effectively assembled so that the male thread 22 of the screw shaft 20, the male threads 34 of the planetary screw rollers and the female thread 26 of the roller nut 24 mate properly, while the external gears 70 and 72 of the planetary screw rollers 36 mesh properly with the internal gears 74 an 76, respectively

Further, according to this method of assembly, the carrier 78 functions as an auxiliary means in assembling, and after the completion of the assembly the carrier 78 remains in the motion conversion device 10 to function as a means for rotatably supporting the planetary screw rollers 36, increasing the efficiency of operation of the carrier.

Seventh embodiment

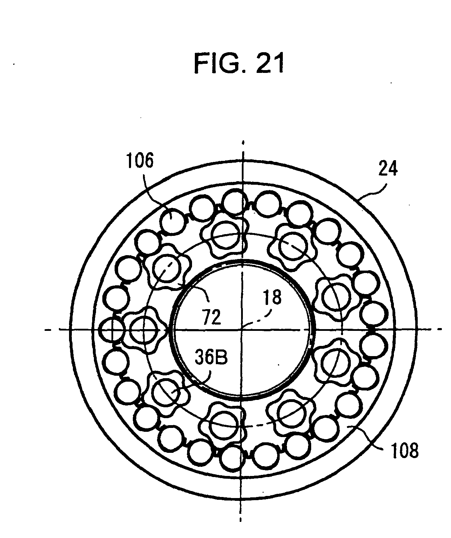

Fig. 21 is a cross sectional view similar to Fig. 11 (B), showing a seventh embodiment of the planetary differential screw type rotary/linear motion conversion device according to the present invention. In Fig. 21, the portions corresponding to those shown in Fig. 11 are designated by the same reference numerals.

In this seventh embodiment, a plurality of round bodies 106 such as balls or rollers (cylinders) are provided at the positions of the gear apexes of the internal gears 74 and 76 in the sixth embodiment as a substitute for the internal gears, wherein the round bodies 108 are supported by support rings 108 pressed into opposite ends of the roller nut 24, so as to be rotatable around respective axes extending in parallel with the axis 18. The external gears 70 and 72 are formed to have a gear shape to smoothly engage with the round bodies 106. Thus, the external gears 70 and 72 rotate in contact with the round bodies 106, while the round bodies 106 rotate around their axes for a smooth meshing with the gears.

The round bodies 106 function in the same manner as the internal gears 74 and 76 in the sixth embodiment, and therefore, the round bodies 106 may be deemed as an internal gear. Therefore, also in this embodiment, the ratio of the teeth number between the external gear and the internal gear is set to correspond to the ratio of the effective screw diameters between the male thread 34 of the planetary screw rollers 36 and the female thread 26 of the roller nut 24.

Therefore, according to this seventh embodiment, the planetary screw rollers 36 and the roller nut 24 can definitely transmit a rotational movement therebetween, with a reduction of the gear striking noise as compared with the sixth embodiment. Further, it is possible to make the radius of the tip portions of the teeth of the external gears 70 and 72 to be smaller than the radius of the groove of the male thread 34, so that the teeth of the external gears 70 and 72 do not interfere with the male thread 34 as viewed in the section including the axis 38, whereby the assembling of the motion conversion device according to this embodiment becomes easier as compared with the sixth embodiment, with a probability that the external gears are manufactured by pressing.

Eighth embodiment

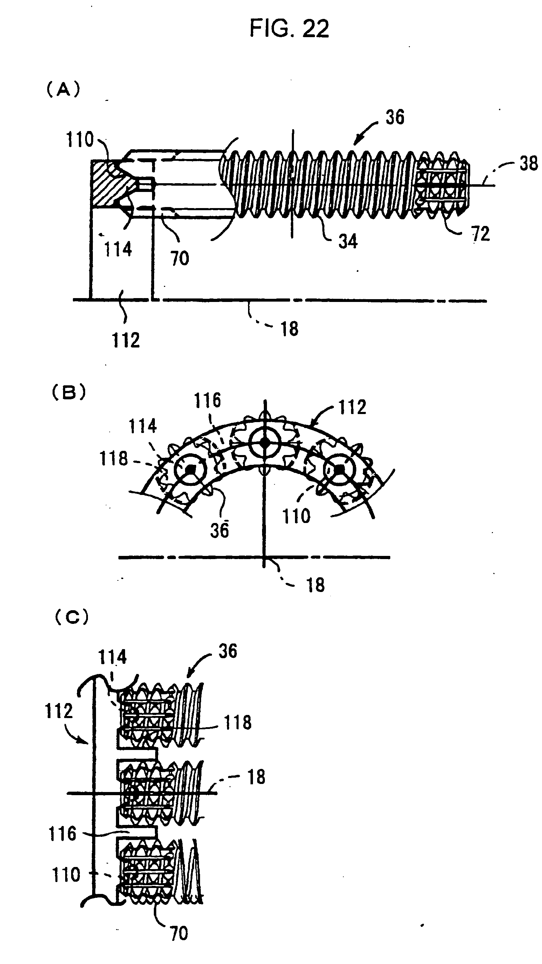

Fig. 22 shows an eighth embodiment of the planetary differential screw type rotary/linear motion conversion device according to the present invention by a partially sectional view (A), a partial left side view (B) and a partial plan view (C). Also in Fig. 22, the members corresponding to those shown in Fig. 11 are designated by the same reference numerals as in Fig. 11.

In this eighth embodiment, axially opposite ends of each of the planetary screw rollers 36 are formed with tapered grooves 110 aligned with the axis 38. A pair of carriers 112 are provided so as to support the opposite axial ends of each of the planetary screw rollers 38 to be rotatable about the axis 38. Each carrier 112 is a ring member having an outer diameter smaller than the inner diameter of the female thread 26 of the roller nut 24 not shown in Fig. 22 and an inner diameter larger than the outer diameter of the male thread 22 of the screw shaft 20 not shown in Fig. 22.

Each carrier 112 has a plurality of cone shaped projections 114 uniformly spaced around the circumference thereof, each projection 114 engaging into the tapered groove 110 so as to support the respective planetary screw rollers 36 to be rotatable about the respective axes 38 at the axial opposite ends thereof. The carrier 112 has a plurality of side support portions 116 between each two adjacent projections 114. Each of the side support portions 116 has two arcuate side wall surfaces 118 of a radius slightly larger than the outer radius of the external gears 70 and 72 of the planetary screw roller 36, so as to support the external gears 70 and 72 to be rotatable therein. It is desirable that the carriers 112 are made of a metal such as an oil-bearing metal.

The outside diameter of the carriers supporting the opposite axial ends of the respective planetary screw rollers 36 around the axes 38 must be smaller than the inner diameter of the female thread 26 of the roller nut 24, and the inner diameter thereof must be larger than the outer diameter of the male thread 22 of the screw shaft 20. When the respective planetary screw rollers 36 are rotatably supported at the opposite ends thereof by the shaft portions 36A and 36B, the diameter of the shaft portions must be designed at a size which ensures a definite rotational support of the planetary screw rollers.

Therefore, when the diameter of the planetary screw roller 36 is designed to be small for reducing the size of the motion conversion device 10, the diameter of the carrier is unavoidably decreased, whereby the thickness of the carrier in the radial direction becomes small, making it difficult to provide a definite rotational support for the planetary screw rollers.

In this regard, according to this eighth embodiment, the carrier 112 ensures a definite rotational support for the planetary screw rollers even in the case that the diameter of the planetary screw rollers 36 is small by the construction that the carrier 112 rotationally supports the end portion of the planetary screw roller 36 by the engagement of the projection 114 into the tapered groove 114, while the side wall surfaces 118 of the side support portion 116 rotationally support the external gears 70 and 72.

Further, when the male thread 34 and the external gears 70 and 72 of the planetary screw roller 36 are formed by a role forming, a centering tapered groove is formed at the opposite axial ends of the planetary screw roller 36 along the axis 38. Therefore, the tapered grooves for receiving the projections 114 may be the same as the centering tapered grooves, so that the planetary screw roller is definitely supported to be well rotatable by effectively utilizing the tapered grooves for the centering.

Also in this embodiment, in order to ensure that all of the planetary screw rollers 36 are oriented in the same direction with respect to the roller nut 24, the angle or the depth of the tapered grooves 110 may be different for the opposite axial ends, in the same manner as the sixth embodiment.

Although the present invention has been described with respect to several particular embodiments thereof, it will be apparent for those skilled in the art that various modifications are possible with respect to the shown embodiments within the scope of the present invention.

For example, although the thread number difference of the screw shaft 20 or the roller nut 24 has been explained to be +1 or -1, the thread number difference may be of other values. Further, in the first through fifth embodiments, the male thread 22 of the screw shaft 20 may be right-handed, while the male thread 34 of the planetary screw rollers 36 and the female thread 26 of the roller nut 24 may be left-handed, and in the sixth through eighth embodiments, the male thread 22 of the screw shaft 20 may be left-handed, while the male thread 34 of the planetary screw rollers 36 and the female thread 26 of the roller nut 24 may be right-handed.

Although in the first through fifth embodiments no means is provided for restricting the relative linear displacement between the screw shaft 20 and the roller nut 24, a stopper for restricting the relative linear displacement between the screw shaft 20 and the roller nut 24 may be provided in the screw shaft 20 or the roller nut 24.

Although in the first through fifth embodiments the foreign material invasion prevention members 56 and 58 are supported by the carriers 40 and 42, respectively, with the female threads 60 and 62 engaging with the male thread 22 of the screw shaft 20 or the male threads 60A and 62A engaging with the female thread 26 of the roller nut 24, these threads may be omitted, and the foreign material invasion prevention members may be replaced by cylindrical dust boots made of an elastic material such as rubber supported by a member movable in the linear directions at one end and rotatably connected to a rotatable member at other ends.

Although in the first through fifth embodiments, the carriers 40 and 42 hold the planetary screw rollers 36 at the circumferentially predetermined positions around the screw shaft 20 while supporting the planetary screw rollers 36 to be rotatable around their respective axes 36 in the form of an annular block, they may be constructed as an annular plate member extending perpendicularly to the axis 18. In that case, it is desirable that they are made of a vibration suppressing steel plate so as to be able to effectively dampen the rotational vibration of the planetary screw rollers 36.

Although the third embodiment is constructed as a modification of the first embodiment, unitarily connecting the first and second motion conversion units having the construction of the first embodiment, the first and second motion conversion units constructing the second through fifth embodiments or the sixth through eighth embodiments may be unitarily connected, so as to obtain the same functions and effects as in the third embodiment.

The external gears 70 and 72 and the internal gears 74 and 76 in the sixth and seventh embodiments may be provided only at one axial end of the planetary screw rollers 36, and since in these embodiments the threads of the respective screws of the roller nut 24, the planetary screw rollers 36 and the screw shaft 20 are shaped in such a thread shape that properly transmits a rotary motion, the external gears 70 and 72 and the internal gears 74 and 76, etc. may be omitted.

The thread flank angles or the thread shapes of the respective members in the sixth embodiment may be applied to any of the first through fifth embodiments. The construction of the external gears 70 and 72, the internal gears 74 and 76 and the carrier 78 may be applied to any of the first through fifth embodiments. The construction of the external gears 70 and 72 and the round bodies 106 of the seventh embodiment may be applied to any of the first through fifth embodiments. The construction of the carrier 112 of the eighth embodiment may be applied to any of the first through fifth embodiment.

**Claims**

1.  A planetary differential screw type rotary/linear motion converter comprising a screw shaft; a plurality of planetary screw rollers positioned around and mating with the screw shaft; and a roller nut surrounding the screw shaft and the planetary screw rollers and mating with the planetary screw rollers; **characterized in that** the screw shaft and the planetary screw rollers mate with one another with thread winding directions thereof being opposite to one another; the planetary screw rollers and the roller nut mate with one another with thread winding directions thereof being same as one another; thread pitches of the screw shaft,. the planetary screw rollers and the roller nut are mutually equal; number of co-extending threads of either of the screw shaft and the roller nut is varied from such a relationship with respect to effective screw diameters vs. the number of co-extending threads of the screw shaft, the planetary screw rollers and the roller nut that induces no linear displacement among the screw shaft, the planetary screw rollers and the roller nut by a relative rotation therebetween; and in accordance with a relative rotation between the screw shaft and the roller nut, the planetary screw rollers rotate relative to the screw shaft and the roller nut in mating therewith with no slippage therebetween.

2.  A planetary differential screw type rotary/linear motion converter according to claim 1, **characterized in that** either of the screw shaft and the roller nut is supported to be rotatable but not linearly movable, while the other of the screw shaft and the roller nut is supported to be linearly movable but not rotatable, with the number of co-extending threads of the other being varied.

3.  A planetary differential screw type rotary/linear motion converter according to claim 2, **characterized in that** a carrier is provided so as to cooperate with said one member for holding the planetary screw rollers at predetermined positions around an axis of the screw shaft to be rotatable around their own axes.

4.  A planetary differential screw type rotary/linear motion converter according to claim 3, **characterized in that** the carrier is supported by said one member to be rotatable relative to the screw shaft and the roller nut but not linearly movable relative to said one member.

5.  A planetary differential screw type rotary/linear motion converter according to claim 1, **characterized in that** the friction loss in the rotation of the planetary screw rollers relatively to the screw shaft and the roller nut through mating of their threads is smaller than the friction loss in sliding of the planetary screw rollers relatively to the screw shaft or the roller nut without the threads mating.

6.  A planetary differential screw type rotary/linear motion converter according to claim 1, **characterized in that** the screw shaft, the planetary screw rollers and the roller nut have each helically extending threads around the respective axes, wherein each thread is bilaterally symmetrical as viewed in a section extending along the corresponding axis.

7.  A planetary differential screw type rotary/linear motion converter according to claim 4, **characterized in that** a member for preventing foreign material from invading into mating portions between the screw shaft, the planetary screw rollers and the roller nut, said foreign material member invasion prevention member being supported to be rotatable relative to the screw shaft and the roller nut but not linearly movable relative to said one member.

8.  A planetary differential screw type rotary/linear motion converter according to claim 7, **characterized in that** the foreign material invasion prevention member has an engaging surface of a thread-shaped section engaging with the thread of said other member, to be linearly movable and rotatable relatively to and along said other member.

9.  A planetary differential screw type rotary/linear motion converter according to claim 7, **characterized in that** the foreign material invasion prevention member is supported by the carrier.

10. A planetary differential screw type rotary/linear motion converter according to claim 1, **characterized in that** the number of the planetary screw rollers is a quotient resulting from dividing a total sum of the numbers of co-extending threads of the screw shaft and the roller nut by a positive integer.

11. A planetary differential screw type rotary/linear motion converter according to claim 3, **characterized in that** the carrier is made of an oil-bearing metal.

12. A planetary differential screw type rotary/linear motion converter according to claim 3, **characterized in that** the carrier has a disk-like shape, made of a vibration-damping steel plate.

13. A planetary differential screw type rotary/linear motion converter according to claim 9, **characterized in that** the carrier and the foreign material invasion prevention member are provided on the opposite sides in an axial direction of the planetary screw rollers.

14. A planetary differential screw type rotary/linear motion converter according to claim 1, **characterized in that** first and second motion conversion units having a structure of the planetary differential screw type rotary/linear motion converter are provided, with the directions of screw threads of the screw shaft, the planetary screw rollers and the roller nut in the first motion conversion unit being opposite to those of the screw shaft, the planetary screw rollers and the roller nut in the. second motion conversion unit, wherein the screw shafts of the first and second motion conversion units are mutually aligned and integrally connected with each other; while the roller nuts of the first and second motion conversion units are mutually aligned and integrally connected with each other; and the planetary screw rollers of the first and the second motion conversion units are mutually spaced apart along the axis of the screw shaft.

15. A planetary differential screw type rotary/linear motion converter according to claim 2, **characterized in that** the foreign material invasion prevention member is provided near each end portion of opposite sides of the planetary screw rollers of the first and the second motion conversion units.

16. A planetary differential screw type rotary/linear motion converter according to claim 2, **characterized in that**, denoting Ds, Dp and Dn to be effective screw diameters of the screw shaft, the planetary screw roller and the roller nut, respectively, and Ns, Np and Nn to be the number of co-extending threads of the screw shaft, the planetary screw rollers and the roller nut, respectively, when the relationship between the effective screw diameters and the number of co-extending threads with respect to the screw shaft, the planetary screw rollers and the roller nut which induces no linear displacement among the screw shaft, the planetary screw rollers and the roller nut even when the screw shaft or the roller nut rotates relative to the other satisfies a relationship such as Ns:Np:Nn=Ds:Dp:Dn, the number of co-extending threads of the screw shaft or the number of co-extending threads of the roller nut is varied to be larger by 1 or smaller by 1 than the number which satisfies said relationship.

17. A planetary differential screw type rotary/linear motion converter according to claim 2, **characterized in that** the roller nut is supported to be rotatable but not linearly movable, the screw shaft is supported to be not rotatable but linearly movable, and the number of co-extending threads of the screw shaft is varied.

18. A planetary differential screw type rotary/linear motion converter according to claim 2, **characterized in that** the screw shaft is supported to be rotatable but not linearly movable, the roller nut is supported to be not rotatable but linearly movable, and the number of co-extending threads of the roller nut is varied

19. A planetary differential screw type rotary/linear motion converter according to claim 2, **characterized in that**, even when a force is applied to the other member in the direction of a linear displacement, said one member does not rotate.

20. A planetary differential screw type rotary/linear motion converter according to claim 4, **characterized in that** the carrier is supported by the roller nut to be rotatable relative to the screw shaft and the roller nut but not linearly movable relative to the roller nut.

21. A planetary differential screw type rotary/linear motion converter according to claim 4, **characterized in that** the carrier is supported by the screw shaft to be rotatable relative to the screw shaft and the roller nut but not linearly movable relative to the screw shaft.

22. A planetary differential screw type rotary/linear motion converter according to claim 7, **characterized in that** the foreign material invasion prevention member is made of a rubber-like elastic material.

**23.** A planetary differential screw type rotary/linear motion converter according to claim 7, **characterized in that** the foreign material invasion prevention member is supported to be rotatable relative to the screw shaft and the roller nut but not linearly movable relative to the roller nut.

**24.** A planetary differential screw type rotary/linear motion converter according to claim 7, **characterized in that** the foreign material invasion prevention member is supported to be rotatable relative to the screw shaft and the roller nut but not linearly movable relative to the screw shaft.

**25.** A planetary differential screw type rotary/linear motion converter according to claim 8, **characterized in that** the engaging surface of the foreign material invasion prevention member is elastically biased to the threads of the other member.

**26.** A planetary differential screw type rotary/linear motion converter according to claim 9, **characterized in that** the foreign material invasion prevention member is removably attached to the carrier.

**27.** A planetary differential screw type rotary/linear motion converter according to claim 10, **characterized in that** the foreign material invasion prevention member is located at a side opposite to the planetary screw rollers with respect to the carrier.

**28.** A planetary differential screw type rotary/linear motion converter according to claim 1, **characterized in that** the planetary screw rollers and roller nut are adapted to transmit rotary motions therebetween by a gear structure comprising an external gear provided on the planetary screw rollers and an internal gear provided on the roller nut and mating with the external gear, in addition to the threads of the same direction.

**29.** A planetary differential screw type rotary/linear motion converter according to claim 28, **characterized in that** the axis of the external gear is aligned with the axis of the planetary screw roller, and the diameter of the standard pitch circle of the external gear is equal to the standard screw diameter of the planetary screw roller.

**30.** A planetary differential screw type rotary/linear motion converter according to claim 28, **characterized in that** the gear ratio of the external gear and the internal gear is equal to the ratio of the effective screw diameters of the external gear and the internal gear.

**31.** A planetary differential screw type rotary/linear motion converter according to claim 28, **characterized in that** the gear ratio of the external gear and the internal gear is equal to the ratio of the numbers of co-extending threads of the external gear and the internal gear.

**32.** A planetary differential screw type rotary/linear motion converter according to claim 28, **characterized in that** the external gear is integrally formed in at least one end portion of the planetary screw roller and the internal gear is fixed to the roller nut.

**33.** A planetary differential screw type rotary/linear motion converter according to claims 28, **characterized in that** the external gears are formed at opposite ends of the planetary screw roller, and there is a phase difference larger than 0° and smaller than 360° between the tooth shapes of the two external gears.

**34.** A planetary differential screw type rotary/linear motion converter according to claim 33, **characterized in that** the phase difference is larger than 90° and smaller than 270°.

**35.** A planetary differential screw type rotary/linear motion converter according to claim 34, **characterized in that** the phase difference is 180°.

**36.** A planetary differential screw type rotary/linear motion converter according to claim 28, **characterized in that** the teeth of the external gear define a part of the thread of the planetary screw roller.

**37.** A planetary differential screw type rotary/linear motion converter according to claim 28, **characterized in that** the external gear is provided in at least one end portion of the planetary screw roller; the teeth of the internal gear is defined by a plurality of rotary bodies each being rotatable at least around an axis parallel to the axis of the roller nut and mating with the teeth of the external gear.

**38.** A planetary differential screw type rotary/linear motion converter according to claim 1, **characterized in that** the shapes of the threads of the screw shaft and the planetary screw rollers have parts of a common pressure angle in a cross section taken along the axis of the screw shaft.

**39.** A planetary differential screw type rotary/linear motion converter according to claim 38, **characterized in that** the threads of the screw shaft and planetary screw rollers have mean helical angles of thread calculated based upon pitches, effective screw diameters and number of co-extending threads, a mean pressure angle calculated based the mean helical angles, and thread apex angles calculated based on the mean pressure angles and the mean helical angles.

**40.** A planetary differential screw type rotary/linear motion converter according to claim 39, **characterized in that** the thread number difference of the screw shaft is a positive value; the thread of the roller nut has a trapezoidal thread shape; a thread flank angle at a tooth tip portion of the planetary screw roller and a thread flank angle at a tooth root portion of the screw shaft are the same as a thread flank angle of the roller nut; and a mean value of the thread flank angle at a tooth root portion of the planetary screw roller and a mean value of the thread flank angle at a tooth tip portion of the screw shaft are the same as a thread flank angle of the roller nut.

**41.** A planetary differential screw type rotary/linear motion converter according to claim 39, **characterized in that** the thread number difference of the screw shaft is a negative value; the thread of the roller nut has a trapezoidal thread shape; a thread flank angle of the planetary screw roller and a thread flank angle at a tooth tip portion of the screw shaft are the same as a thread flank angle of the roller nut; and a thread flank angle at a tooth root portion of the screw shaft is a smaller one of two thread flank angles calculated based upon the mean pressure angles and the mean helical angles.

**42.** A planetary differential screw type rotary/linear motion converter according to claim 1, **characterized in that** end faces of opposite axial ends of the planetary screw roller have openings aligned to an axis; and the carrier has a plurality of projections, wherein the projections are fitted into the openings to support the planetary screw roller to be rotatable around the axis.

**43.** A planetary differential screw type rotary/linear motion converter according to claim 42, **characterized in that** the holes and the projections have tapered shapes.

**44.** A planetary differential screw type rotary/linear motion converter according to claim 42, **characterized in that** the carrier has the side supporting portion which partially surrounds and supports a side of an end portion of the planetary screw roller.

**45.** A planetary differential screw type rotary/linear motion converter according to claim 42, **characterized in that that** the carrier is made of an oil-bearing metal.

**46.** A method for assembling the planetary differential screw type rotary/linear motion converter according to claim 1, **characterized in that** a plurality of the planetary screw rollers are supported by a holder to be in a predetermined spatial relationship relative to one another and rotatable around their own axes, and the holder is inserted into the roller nut together with the planetary screw rollers while being rotated.

**47.** A method for assembling the planetary differential screw type rotary/linear motion converter according to claim 32, **characterized in that** a plurality of the planetary screw rollers are supported by a holder to be in a predetermined spatial relationship relative to one another and rotatable around their own axes, the holder is inserted into the roller nut together with the planetary screw rollers while being rotated, and the internal gear is fixed to the roller nut in a condition mated with the external gear.

**48.** A method for assembling the planetary differential screw type rotary/linear motion converter according to claim 46, **characterized in that** the holder has a first support portion which rotatably supports one ends of the planetary screw rollers, a second support portion which rotatably supports the other ends of the planetary screw rollers, and a connection portion which integrally connects the first and the second support portions.

**49.** A method for assembling the planetary differential screw type rotary/linear motion converter according to claim 48, **characterized in that** the holder is used for assembling the planetary differential screw type rotary/linear motion converter of the above-mentioned structure 33; the one ends and the other ends of the planetary screw rollers have each first and second shaft portions of mutually different outside diameters, and the first and second support portions each have openings of inner diameters corresponding to the diameters of the first and second shaft portions.

**50.** A method for assembling the planetary differential screw type rotary/linear motion converter according to claim 46, **characterized in that** the holder serves as a carrier which cooperates with one of the members to hold the planetary screw rollers in predetermined positions around the axis of the screw shaft to be rotatable around their axes when the planetary differential screw type rotary linear motion converter has been assembled.

**51.** A method for assembling the planetary differential screw type rotary/linear motion converter according to claim 46, **characterized in that** the holder is made of a resin.

FIG. 1

# FIG. 2

# FIG. 3

# FIG. 4

# FIG. 5

# FIG. 6

(A)

(B)

FIG. 7

FIG. 8

# FIG. 9

EP 1 617 103 A1

## FIG. 10

EP 1 617 103 A1

FIG. 11

# FIG. 12

(B)

(A)

(C)

# FIG. 13

(B)                             (A)                             (C)

EP 1 617 103 A1

# FIG. 14

(A)

(B)

(C)

# FIG. 15

(A)

26

34

24

100, 102

36

(B)

34

22

36

102, 104

20

# FIG. 16

EP 1 617 103 A1

FIG. 17

(A)

(B)

(C)

44

# FIG. 18

(A)

26
34
24
100、102
36

(B)

34
22
36
102、104
20

## FIG. 19

## FIG. 20

# FIG. 21

# FIG. 22

(A)

(B)

(C)

## INTERNATIONAL SEARCH REPORT

| International application No. |
| --- |
| PCT/JP2004/005598 |

**A. CLASSIFICATION OF SUBJECT MATTER**
Int.Cl⁷ F16H25/20

According to International Patent Classification (IPC) or to both national classification and IPC

**B. FIELDS SEARCHED**

Minimum documentation searched (classification system followed by classification symbols)
Int.Cl⁷ F16H25/20, F16H25/22

Documentation searched other than minimum documentation to the extent that such documents are included in the fields searched
| Jitsuyo Shinan Koho | 1922–1996 | Jitsuyo Shinan Toroku Koho | 1996–2004 |
| Kokai Jitsuyo Shinan Koho | 1971–2004 | Toroku Jitsuyo Shinan Koho | 1994–2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br><br>Y<br><br>A | JP 10-196757 A (Akebono Research and Development Center Ltd.),<br>31 July, 1998 (31.07.98),<br>Full text; Figs. 1 to 4<br>& DE 19753445 A | 1,10,16,<br>28-32,36<br>2-4,6-9,13,<br>17,18,20-25<br>5,11,12,14,<br>15,19,26,27,<br>33-35,37-51 |
| Y | JP 2000-110907 A (Toyota Motor Corp.),<br>18 April, 2000 (18.04.00),<br>Claim 4<br>(Family: none) | 2-4,7-9,13,<br>17,18,20-25 |

☒ Further documents are listed in the continuation of Box C. ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>23 July, 2004 (23.07.04) | Date of mailing of the international search report<br>10 August, 2004 (10.08.04) |
| --- | --- |
| Name and mailing address of the ISA/<br>Japanese Patent Office | Authorized officer |
| Facsimile No. | Telephone No. |

Form PCT/ISA/210 (second sheet) (January 2004)

| | **INTERNATIONAL SEARCH REPORT** | International application No. |
|---|---|---|
| | | PCT/JP2004/005598 |

C (Continuation).  DOCUMENTS CONSIDERED TO BE RELEVANT

| Category* | Citation of document, with indication, where appropriate, of the relevant passages | Relevant to claim No. |
|---|---|---|
| Y | JP 10-159931 A  (Akebono Research and Development Center Ltd.), 16 June, 1998 (16.06.98), Figs. 2 to 3 & DE 19753445 A | 6 |
| Y A | JP 4-81654 B2  (Deutsche Forschungs-und Versuchsanstalt fur Luft-und Raumfahrt e.V.), 24 December, 1992 (24.12.92), Column 8, lines 12 to 20; Fig. 1 & DE 3739059 A        & EP 0320621 A1 & US 4926708 A | 7-9,13,22-25 15,26,27 |
| Y | JP 38-7725 Y1  (Tsubakimoto Kokyu Seizo Kabushiki Kaisha), 27 April, 1963 (27.04.63), Full text; drawings (Family: none) | 8,22,25 |
| A | Microfilm of the specification and drawings annexed to the request of Japanese Utility Model Application No. 4434/1990(Laid-open No. 96458/1991) (Kuroda Precision Industries Ltd.), 02 October, 1991 (02.10.91), Page 7, lines 18 to 20 (Family: none) | 11,45 |
| A | Microfilm of the specification and drawings annexed to the request of Japanese Utility Model Application No. 139731/1989(Laid-open No. 78152/1991) (NTN Corp.), 07 August, 1991 (07.08.91), Page 5, line 15 to page 6, line 14 (Family: none) | 12 |
| A | US 3884090 A  (SKF Industrial Trading and Development Co., B.V.), 20 May, 1975 (20.05.75), Fig. 1 & DE 2320406 A        & FR 2182505 A & GB 1417652 A        & CH 574574 A | 14,15 |
| A | JP 51-98472 A  (La Technique Integrale), 30 August, 1976 (30.08.76), Drawings & DE 2601493 A        & FR 2298742 A & US 4037893 A        & CH 601698 A & GB 1541713 A | 33-35,37, 42-45 |

Form PCT/ISA/210 (continuation of second sheet) (January 2004)

**INTERNATIONAL SEARCH REPORT**

| | International application No. |
|---|---|
| | PCT/JP2004/005598 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 56-97659 A  (La Technique Integrale),<br>06 August, 1981 (06.08.81),<br>Figs. 9 to 10<br>& EP 25750 A1          & FR 2468798 A<br>& US 4375770 A | 43 |

Form PCT/ISA/210 (continuation of second sheet) (January 2004)